(19)
Europäisches
Patentamt

European
Patent Office

Office européen
des brevets

(11) **EP 4 637 016 A1**

(12) # EUROPEAN PATENT APPLICATION
published in accordance with Art. 153(4) EPC

(43) Date of publication:
**22.10.2025 Bulletin 2025/43**

(21) Application number: **24780192.1**

(22) Date of filing: **25.03.2024**

(51) International Patent Classification (IPC):
*H02M 7/48* (2007.01)          *F24F 11/88* (2018.01)
*H02J 3/32* (2006.01)          *H02J 3/38* (2006.01)

(52) Cooperative Patent Classification (CPC):
**F24F 11/88; H02J 3/01; H02J 3/32; H02J 3/38;
H02M 7/48**

(86) International application number:
**PCT/JP2024/011721**

(87) International publication number:
**WO 2024/204074 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.03.2023   JP 2023058839
05.03.2024   JP 2024032898**

(71) Applicants:
• **Daikin Industries, Ltd.**
**Osaka-shi, Osaka 530-0001 (JP)**
• **The University of Tokyo**
**Bunkyo-ku, Tokyo 113-8654 (JP)**

(72) Inventors:
• **MONGUCHI, Suguru**
**Osaka-shi, Osaka 530-0001 (JP)**

• **HIBINO, Hiroshi**
**Osaka-shi, Osaka 530-0001 (JP)**
• **YANAGIDA, Yasuto**
**Osaka-shi, Osaka 530-0001 (JP)**
• **YAMAGIWA, Akio**
**Osaka-shi, Osaka 530-0001 (JP)**
• **YASUDA, Yoshiki**
**Osaka-shi, Osaka 530-0001 (JP)**
• **FUJIMOTO, Hiroshi**
**Tokyo 113-8654 (JP)**
• **FUJITA, Toshiyuki**
**Tokyo 113-8654 (JP)**
• **NAGAI, Sakahisa**
**Tokyo 113-8654 (JP)**

(74) Representative: **Hoffmann Eitle
Patent- und Rechtsanwälte PartmbB
Arabellastraße 30
81925 München (DE)**

(54) **POWER SYSTEM AND ELECTRIC DEVICE**

(57)    A power system includes: a DC link unit; a grid-connected inverter coupled to the DC link unit and configured to be couplable to a single-phase AC power supply, the grid-connected inverter including a forward power flow operation and a reverse power flow operation, the forward power flow operation being an operation in which AC power supplied from the single-phase AC power supply is converted into DC power and supplied to the DC link unit, the reverse power flow operation being an operation in which DC power supplied from the DC link unit is converted into AC power and supplied to the single-phase AC power supply; at least one DC power source coupled to the DC link unit and configured to supply DC power to the DC link unit; a smoothing capacitor coupled to the DC link unit and configured to smooth a DC voltage of the DC link unit; and at least one electric device coupled to the DC link unit and configured to consume DC power supplied from the DC link unit. The at least one electric device includes a power ripple adjustment function to adjust a power ripple component in DC power consumed by the at least one electric device in accordance with an operation of the grid-connected inverter and a voltage phase of the single-phase AC power supply, the power ripple component being a frequency component at an integer multiple of two or more of a power supply frequency of the single-phase AC power supply.

EP 4 637 016 A1

FIG.1

$P_{pv} = P_{pv\_dc} \quad (P_{pv} \geqq 0)$

$P_{battery} = P_{battery\_dc}$

$P_{load} = P_{load\_ac} cos(2\omega t) + P_{load\_dc} \quad (P_{load} \geqq 0)$

2

**Description**

Technical Field

The present disclosure relates to a power system and an electric device.

Background Art

For example, Patent Literature 1 discloses a power conversion apparatus including a capacitor, an inverter unit, and a control unit. The inverter unit switches and outputs an input voltage. The capacitor is coupled to either the input side or the output side of the inverter unit. The control unit includes a voltage control unit, a current control unit, and a ripple compensation unit. The voltage control unit receives a terminal voltage signal from the capacitor and calculates and outputs a power command signal to match the terminal voltage signal to a commanded value. The current control unit receives a command signal obtained as the error between a current command signal, which is obtained based on the power command signal, and a current detection signal, and applies pulse-width modulation control to the inverter unit based on the command signal. The ripple compensation unit, located before the current control unit, responds to the ripple component induced by the terminal voltage and cancels it.

Citation List

Patent Literature

Patent Literature 1: Japanese Patent Application Laid-Open Publication No. 11-308871

Summary of Invention

Technical Problem

A configuration is known in which direct current (DC) power from a DC power source, such as a photovoltaic panel, is converted into alternating current (AC) power by a grid-connected inverter, and excess power after self-consumption is fed back into the power grid. Since the power grid contains a power ripple component with a frequency twice the power supply frequency, it is necessary to reduce the power ripple component. Thus, a need exists for a technique to adjust the power ripple component during both a forward power flow operation (converting AC power into DC power) and a reverse power flow operation (converting DC power into AC power) of the grid-connected inverter.

It is an object of the present disclosure to adjust the power ripple component in accordance with the operation of the grid-connected inverter.

Solution to Problem

A first aspect of the present disclosure provides a power system including: a DC link unit; a grid-connected inverter coupled to the DC link unit and configured to be couplable to a single-phase AC power supply, the grid-connected inverter including a forward power flow operation and a reverse power flow operation, the forward power flow operation being an operation in which AC power supplied from the single-phase AC power supply is converted into DC power and supplied to the DC link unit, the reverse power flow operation being an operation in which DC power supplied from the DC link unit is converted into AC power and supplied to the single-phase AC power supply; at least one DC power source coupled to the DC link unit and configured to supply DC power to the DC link unit; a smoothing capacitor coupled to the DC link unit and configured to smooth a DC voltage of the DC link unit; and at least one electric device coupled to the DC link unit and configured to consume DC power supplied from the DC link unit. The at least one electric device includes a power ripple adjustment function to adjust a power ripple component in DC power consumed by the at least one electric device in accordance with an operation of the grid-connected inverter and a voltage phase of the single-phase AC power supply, the power ripple component being a frequency component at an integer multiple of two or more of a power supply frequency of the single-phase AC power supply. This feature allows the power ripple component to be adjusted in accordance with the operation of the grid-connected inverter.

A second aspect of the present disclosure provides the power system according to the first aspect, wherein the grid-connected inverter includes a disconnected operation, in which neither conversion from AC power to DC power nor from DC power to AC power is performed, and during the grid-connected inverter performing the disconnected operation, the power ripple adjustment function of the at least one electric device either adjusts the power ripple component to approach zero or does not adjust the power ripple component. This feature allows the power ripple component to be adjusted in accordance with the disconnected operation of the grid-connected inverter.

A third aspect of the present disclosure provides the power system according to the first or second aspect, wherein the power ripple adjustment function of the at least one electric device adjusts the power ripple component in DC power supplied from the DC link unit to the at least one DC power source or the smoothing capacitor such that a frequency component at twice the power supply frequency contained in the power ripple component is reduced. This feature allows for adjustment of the power ripple component generated in single-phase AC.

A fourth aspect of the present disclosure provides the power system according to the first or second aspect, wherein the power ripple adjustment function of the at least one electric device adjusts an amplitude of a frequency component at twice the power supply frequency contained in the power ripple component, as well as a phase difference between a voltage of the single-phase AC power supply and the frequency component at twice the power supply frequency contained in the power ripple component. This feature facilitates adjustment of the power ripple component.

A fifth aspect of the present disclosure provides the power system according to any one of the first to fourth aspects, wherein the power ripple adjustment function of the at least one electric device includes a first control mode in which, during the grid-connected inverter performing the reverse power flow operation to supply first DC power from the DC link unit to the grid-connected inverter, the power ripple component is adjusted such that DC power consumed by the at least one electric device approaches DC power that is obtained by subtracting the first DC power from DC power supplied by the at least one DC power source. This feature eliminates the need for reducing the output of the DC power source.

A sixth aspect of the present disclosure provides the power system according to any one of the first to fifth aspects, wherein the power ripple adjustment function of the at least one electric device includes a second control mode in which, during the grid-connected inverter performing the forward power flow operation to supply second DC power from the grid-connected inverter to the DC link unit, the power ripple component is adjusted such that DC power consumed by the at least one electric device approaches DC power that is the sum of DC power supplied by the at least one DC power source and the second DC power. This feature eliminates the need for reducing the output of the DC power source.

A seventh aspect of the present disclosure provides the power system according to the first aspect, wherein the power ripple adjustment function of the at least one electric device includes: a first control mode in which the power ripple component is adjusted such that DC power consumed by the at least one electric device approaches DC power that is obtained by subtracting first DC power from DC power supplied by the at least one DC power source, the first DC power being DC power supplied from the DC link unit to the grid-connected inverter; a second control mode in which the power ripple component is adjusted such that DC power consumed by the at least one electric device approaches DC power that is the sum of DC power supplied by the at least one DC power source and second DC power, the second DC power being DC power supplied from the grid-connected inverter to the DC link unit; and a third control mode in which the power ripple component is either adjusted to approach zero or is not adjusted. This feature allows the power ripple component to be adjusted in accordance with the operation of the grid-connected inverter.

An eighth aspect of the present disclosure provides the power system according to the seventh aspect, wherein the grid-connected inverter grid-connected inverter includes a disconnected operation in which neither conversion from AC power to DC power nor from DC power to AC power is performed. During the grid-connected inverter performing the reverse power flow operation, the power ripple adjustment function of the at least one electric device operates in the first control mode when the power ripple component exceeds a predetermined threshold, and operates in the third control mode when the power ripple component is less than or equal to the threshold. During the grid-connected inverter performing the forward power flow operation, the power ripple adjustment function operates in the second control mode when the power ripple component exceeds the threshold, and operates in the third control mode when the power ripple component is less than or equal to the threshold. During the grid-connected inverter performing the disconnected operation, the power ripple adjustment function operates in the third control mode. This feature can reduce ripples in the power consumed by the electric device.

A ninth aspect of the present disclosure provides the power system according to the seventh aspect, wherein the grid-connected inverter includes a disconnected operation in which neither conversion from AC power to DC power nor from DC power to AC power is performed, and the power ripple adjustment function of the at least one electric device operates in the first control mode during the grid-connected inverter performing the reverse power flow operation, operates in the second control mode during the grid-connected inverter performing the forward power flow operation, and operates in the third control mode during the grid-connected inverter performing the disconnected operation. This feature can reduce the capacitance of the smoothing capacitor.

A tenth aspect of the present disclosure provides the power system according to any one of the first to ninth aspects, wherein the at least one electric device includes a rotary electric machine and is configured to adjust the power ripple component by controlling a rotational speed or torque of the rotary electric machine. This feature prevents the effects of power ripples from becoming significant.

An eleventh aspect of the present disclosure provides the power system according to any one of the first to ninth aspects, wherein the at least one electric device is a power system that is a heat pump device including a heat pump unit. This feature prevents the effects of power ripples from becoming significant.

A twelfth aspect of the present disclosure provides the power system according to any one of the first to eleventh aspects, wherein the at least one DC power source is a photovoltaic cell device. This feature facilitates interconnection with the power grid.

A thirteenth aspect of the present disclosure provides the power system according to any one of the first to eleventh aspects, wherein the at least one DC power source is an energy storage device. This feature facilitates interconnection with the power grid.

A fourteenth aspect of the present disclosure provides an electric device configured to consume DC power supplied from a DC link unit. The electric device includes a power ripple adjustment function to adjust a power ripple component in DC power consumed by the electric device in accordance with an operation of a grid-connected inverter coupled to a single-phase AC power supply, as well as a voltage phase of the single-phase AC power supply, the power ripple component being a frequency component at an integer multiple of two or more of a power supply frequency of the single-phase AC power supply, the operation of the grid-connected inverter including a forward power flow operation and a reverse power flow operation, the forward power flow operation being an operation in which AC power supplied from the single-phase AC power supply is converted into DC power and supplied to the DC link unit, the reverse power flow operation being an operation in which DC power supplied from the DC link unit is converted into AC power and supplied to the single-phase AC power supply. This feature allows the power ripple component to be adjusted in accordance with the operation of the grid-connected inverter.

Brief Description of Drawings

FIG. 1 illustrates an example power system according to an exemplary embodiment.

FIGS. 2A and 2B illustrate schematic energy flow during reverse and forward power flow operations of a grid-connected inverter, where FIG. 2A illustrates energy flow during a reverse power flow operation, and FIG. 2B illustrates energy flow during a forward power flow operation.

FIG. 3 is a table showing the power ripple component absorbed by a smoothing capacitor and the power ripple component consumed by a DC load.

FIGS. 4A to 4D illustrate energy flow in control pattern 1, where FIG. 4A shows the energy flow, FIG. 4B shows the power of the grid-connected inverter, FIG. 4C shows the power of the smoothing capacitor, and FIG. 4D shows the power of the DC load.

FIGS. 5A to 5D illustrate energy flow in control pattern 2, where FIG. 5A shows the energy flow, FIG. 5B shows the power of the grid-connected inverter, FIG. 5C shows the power of the smoothing capacitor, and FIG. 5D shows the power of the DC load.

FIGS. 6A to 6D illustrate energy flow in control pattern 3, where FIG. 6A shows the energy flow, FIG. 6B shows the power of the grid-connected inverter, FIG. 6C shows the power of the smoothing capacitor, and FIG. 6D shows the power of the DC load.

FIGS. 7A to 7D illustrate energy flow in control pattern 4, where FIG. 7A shows the energy flow, FIG. 7B shows the power of the grid-connected inverter, FIG. 7C shows the power of the smoothing capacitor, and FIG. 7D shows the power of the DC load.

FIGS. 8A and 8B illustrate energy flow in control pattern 5, where FIG. 8A shows the energy flow, and FIG. 8B shows the power of the DC load.

FIGS. 9A to 9D illustrate energy flow in a power system according to a variant, where FIG. 9A shows the energy flow, FIG. 9B shows the power of the grid-connected inverter, FIG. 9C shows the power of the smoothing capacitor, and FIG. 9D shows the power of a DC load group.

FIG. 10 is a table showing the power ripple component absorbed by the smoothing capacitor and the power ripple component consumed by the DC load.

FIGS. 11A to 11D illustrate energy flow in control pattern 6, where FIG. 11A shows the energy flow, FIG. 11B shows the power of the grid-connected inverter, FIG. 11C shows the power of the smoothing capacitor, and FIG. 11D shows the power of the DC load.

FIGS. 12A to 12D illustrate energy flow in control pattern 7, where FIG. 12A shows the energy flow, FIG. 12B shows the power of the grid-connected inverter, FIG. 12C shows the power of the smoothing capacitor, and FIG. 12D shows the power of the DC load.

FIG. 13 illustrates the phase relationship in control pattern 6.

FIG. 14 illustrates the phase relationship in control pattern 7.

Description of Embodiments

An exemplary embodiment will be described below with reference to the appended drawings.

[Power System 1]

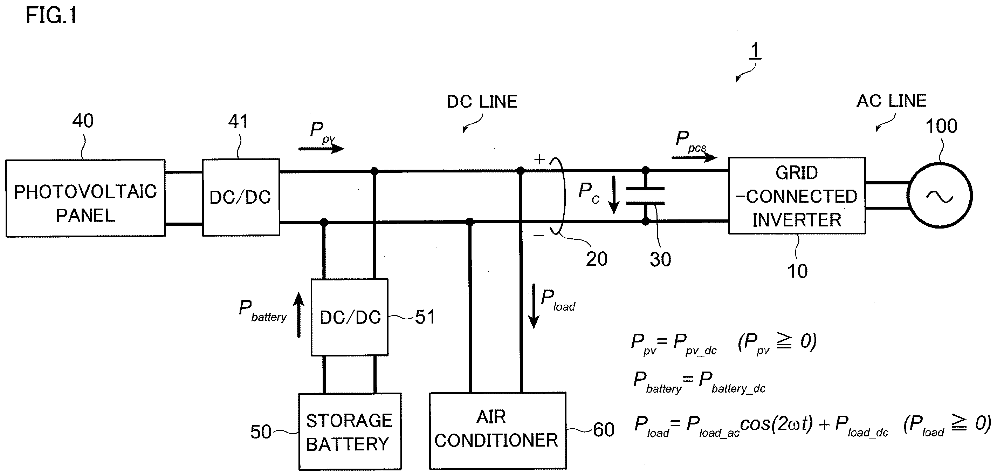

FIG. 1 illustrates an example power system 1 according to the exemplary embodiment.

The power system 1 includes a grid-connected inverter 10, a direct current link unit 20, a smoothing capacitor 30, a photovoltaic panel 40, a storage battery 50, and an air conditioner 60. The power system 1 is coupled to a single-phase AC power supply 100. The single-phase AC power supply 100 is a power grid. In the figure, the grid-connected inverter 10 is denoted as "Grid-connected INV." The grid-connected inverter 10, photovoltaic panel 40, storage battery 50, and air conditioner 60 included in the power system 1 are simply referred to as "devices." The direct current link may be referred to as the "DC link." The photovoltaic panel 40 is an example of the photovoltaic cell device, and the storage battery 50 is an example of the energy storage device.

The grid-connected inverter 10 includes two input/output (I/O) units through which power is input and output. One of the I/O units of the grid-connected inverter 10 is configured to be couplable to the single-phase AC power supply 100. The other of the I/O units of the grid-connected inverter 10 is coupled to the DC link unit 20. The smoothing capacitor 30 is coupled to the DC link unit 20. The photovoltaic panel 40 is coupled to the DC link unit 20 via a DC/DC converter 41. The storage battery 50 is coupled to the DC link unit 20 via a DC/DC converter 51. The air conditioner 60 is coupled to the DC link unit 20. The alternating current path to which the single-phase AC power supply 100 is connected is referred to as the alternating current (AC) line (denoted as "AC Line" in FIG. 1), and the direct current path to which the DC link unit 20, photovoltaic panel 40, storage battery 50, and air conditioner 60 are connected is referred to as the direct current (DC) line (denoted as "DC Line" in FIG. 1). The grid-connected inverter 10 is provided between the AC line and the DC line.

The grid-connected inverter 10 performs a forward power flow operation, a reverse power flow operation, and a disconnected operation. In other words, the operation of the grid-connected inverter 10 in the present disclosure includes a forward power flow operation, a reverse power flow operation, and a disconnected operation. The forward power flow operation converts AC power into DC power, thereby supplying power from the single-phase AC power supply 100 side to the DC link unit 20 side. The reverse power flow operation converts DC power into AC power, thereby supplying power from the DC link unit 20 side to the single-phase AC power supply 100 side. The grid-connected inverter 10 is an inverter capable of supplying power bidirectionally. In the reverse and forward power flow operations, the AC line side and the DC line side operate in parallel via the grid-connected inverter 10. The disconnected operation is an operation in which neither the reverse power flow operation, which converts DC power into AC power, nor the forward power flow operation, which converts AC power into DC power, is performed. In the disconnected operation, the AC line side and the DC line side operate in a disconnected manner. The grid-connected inverter 10 interconnects the AC power system (in this example, the power grid) with the DC power system.

For example, the grid-connected inverter 10 is configured with a full-bridge circuit, in which four transistors are arranged in a bridge configuration.

The DC link unit 20 consists of two DC current paths, one denoted as positive (+) and the other as negative (-).

The smoothing capacitor 30 is connected between the two current paths of the DC link unit 20 and smooths ripples generated in the DC voltage. The smoothing capacitor 30 is, for example, an electrolytic capacitor.

The photovoltaic panel 40 converts light energy into electrical energy through the photovoltaic effect. The DC/DC converter 41 is provided between the photovoltaic panel 40 and the DC link unit 20, and converts the DC voltage output from the photovoltaic panel 40 into the DC voltage of the DC link unit 20.

The storage battery 50 stores electrical energy. The DC/DC converter 51 is provided between the storage battery 50 and the DC link unit 20, and converts the output voltage of the storage battery 50 into the DC voltage of the DC link unit 20.

The photovoltaic panel 40 and the storage battery 50 are examples of the DC power source. The power system 1 may include at least one of the photovoltaic panel 40 and the storage battery 50. When the photovoltaic panel 40 and the storage battery 50 are described collectively, they are referred to as DC power sources. The DC power sources are devices capable of at least supplying power unidirectionally to the DC link unit 20 side. The DC power sources may also be devices capable of supplying power bidirectionally to and from the DC link unit 20 side.

The air conditioner 60 consumes DC power supplied from the DC link unit 20. Instead of the air conditioner 60, a heat pump device may also be used. The air conditioner 60 and the heat pump device are examples of the electric device that consumes DC power. The electric device is a load that consumes DC power. The electric device is a device that draws power unidirectionally from the DC link unit 20 side. In other words, the electric device is a device that does not supply power to the DC link unit 20 side. The electric device that consumes DC power may be referred to as a DC load electric device. The following description discusses the air conditioner 60 as the DC load. Details of the DC load electric device, such as the air conditioner 60 or the heat pump device, will be given below.

In FIG. 1, the names of the power at each device and the directions of power supply are defined. In FIG. 1, the directions of power supply are indicated by respective arrows.

The power when the grid-connected inverter 10 performs either the forward power flow operation or the reverse power flow operation is denoted as power $P_{pcs}$. The power $P_{pcs}$ may also be referred to as DC power $P_{pcs}$. The power $P_{pcs}$ is defined as positive (+) when it is supplied from the DC link unit 20 side to the single-phase AC power supply 100 side. The power $P_{pcs}$ is positive (+) during the reverse power flow operation and negative (-) during the forward power flow operation. During the disconnected operation, in which the grid-connected inverter 10 performs neither the forward power flow operation nor the reverse power flow operation, the power $P_{pes}$ is zero ("0"). Note that power may also be referred to as energy.

The power supplied to the smoothing capacitor 30 is referred to as power $P_C$. The power $P_C$ is defined as positive (+) when it is supplied from the positive (+) side to the negative (-) side of the DC link unit 20.

The power supplied by the photovoltaic panel 40 is referred to as power $P_{pv}$. The power $P_{pv}$ is defined as positive (+) when it is supplied from the photovoltaic panel 40 to the DC link unit 20.

The power supplied by the storage battery 50 is denoted as power $P_{battery}$. The power $P_{battery}$ is defined as positive (+) when it is supplied from the storage battery 50 to the DC link unit 20. If the power $P_{battery}$ is positive (+), the storage battery 50 is discharging; if it is negative (-), the storage battery 50 is charging.

The power consumed by the air conditioner 60 is referred to as power $P_{load}$. The power $P_{load}$ is defined as positive (+) when it is supplied from the DC link unit 20 to the air conditioner 60.

The power $P_{pes}$ of the grid-connected inverter 10 is expressed by following Equation (1), where $P_{pcs\_amp}$ is the amplitude of the power $P_{pcs}$, and $\omega$ is the power supply frequency (angular frequency) of the single-phase AC power supply 100. The power supply frequency (angular frequency) is hereinafter referred to as the frequency.

As indicated by Equation (1), when the grid-connected inverter 10 performs either the forward power flow operation or the reverse power flow operation, a power ripple with a frequency of $2\omega$ at twice the frequency $\omega$ of the single-phase AC power source (100), expressed as $-P_{pcs\_accos}(2\omega t)$, occurs in the DC link unit 20. The power $P_{pcs\_ac}$ is a power ripple generated in the grid-connected inverter 10. In other words, the power $P_{pes}$ includes AC component power $P_{pcs\_ac}$ and DC component power $P_{pcs\_dc}$. The power $P_{pcs\_ac}$ is hereinafter referred to as a power ripple component $P_{pcs\_ac}$, and the $P_{pcs\_dc}$ is hereinafter referred to as a DC power component $P_{pcs\_dc}$.

[Math. 1]

$$P_{pcs} = P_{pcs\_amp}\sin^2(\omega t) = \frac{P_{pcs\_amp}}{2}(1 - \cos(2\omega t))$$

$$= -P_{pcs\_ac}\cos(2\omega t) + P_{pcs\_dc} \qquad \cdots \cdot (1)$$

where

$$P_{pcs\_ac} = P_{pcs\_dc} = \frac{P_{pcs\_amp}}{2}$$

If a power ripple occurs in the DC link unit 20, it may degrade the storage battery 50 or reduce power generation of the photovoltaic panel 40. Hereinafter, the power ripple is described as having the frequency of $2\omega$, which is twice the frequency of the single-phase AC power supply 100. However, the power ripple may include a frequency component at an integer multiple of two or more of the frequency of the single-phase AC power supply 100.

Based on the energy balance, Equation (2) holds. Equation (2') is a rewritten form of Equation (2).

[Math. 2]

$$P_{pv} + P_{battery} - P_{load} - P_C = P_{pcs} \qquad \cdots \cdot (2)$$

$$P_{pcs} - P_{pv} - P_{battery} + P_{load} + P_C = 0 \qquad \cdots \cdot (2')$$

The power $P_{pv}$ of the photovoltaic panel 40 consists only of a DC component and is expressed by following Equation (3). That is, the power $P_{pv}$ includes DC component power $P_{pv\_dc}$. Hereinafter, the DC component power $P_{pv\_dc}$ is referred to as a DC power component $P_{pv\_dc}$. The DC power component $P_{pv\_dc}$ is determined based on the maximum power point tracking (MPPT) control.

The power $P_{battery}$ of the storage battery 50 consists only of a DC component and is expressed by following Equation (4). That is, the power $P_{battery}$ includes DC component power $P_{battery\_dc}$. Hereinafter, the DC component power $P_{battery}$ is referred to as a DC power component $P_{battery\_dc}$. The DC power component $P_{battery\_dc}$ is determined based on the energy balance of the power system 1.

The power $P_{load}$ of the air conditioner 60 is expressed by following Equation (5). The power $P_{load}$ includes AC component power $P_{load\_ac}$ with the frequency of $2\omega$, twice that of the single-phase AC power supply 100, and DC component power $P_{load\_dc}$. Hereinafter, the AC component power $P_{load\_ac}$ is referred to as an AC power component $P_{load\_ac}$, and the DC component power $P_{load\_dc}$ is referred to as a DC power component $P_{load\_dc}$. The AC power component $P_{load\_ac}$ is used for control to cancel out the power ripple component $P_{pcs\_ac}$ generated by the forward and reverse power flow operations of the grid-connected inverter 10. The DC power component $P_{load\_dc}$ is determined based on the required air conditioning capacity. By adjusting the AC power component $P_{load\_ac}$ consumed by the air conditioner 60 to approach the power ripple component $P_{pcs\_ac}$ generated in the grid-connected inverter 10, the power ripple component generated in the grid-connected inverter 10 can be canceled. Hereinafter, the AC power component $P_{load\_ac}$ may be referred to as a power ripple component $P_{load\_ac}$.

[Math. 3]

$$P_{pv} = P_{pv\_dc} \qquad (P_{pv} \geqq 0) \qquad \cdots\cdots (3)$$

$$P_{battery} = P_{battery\_dc} \qquad \cdots\cdots (4)$$

$$P_{load} = P_{load\_ac}\, cos(2\omega t) + P_{load\_dc} \qquad (P_{load} \geqq 0) \qquad \cdots\cdots (5)$$

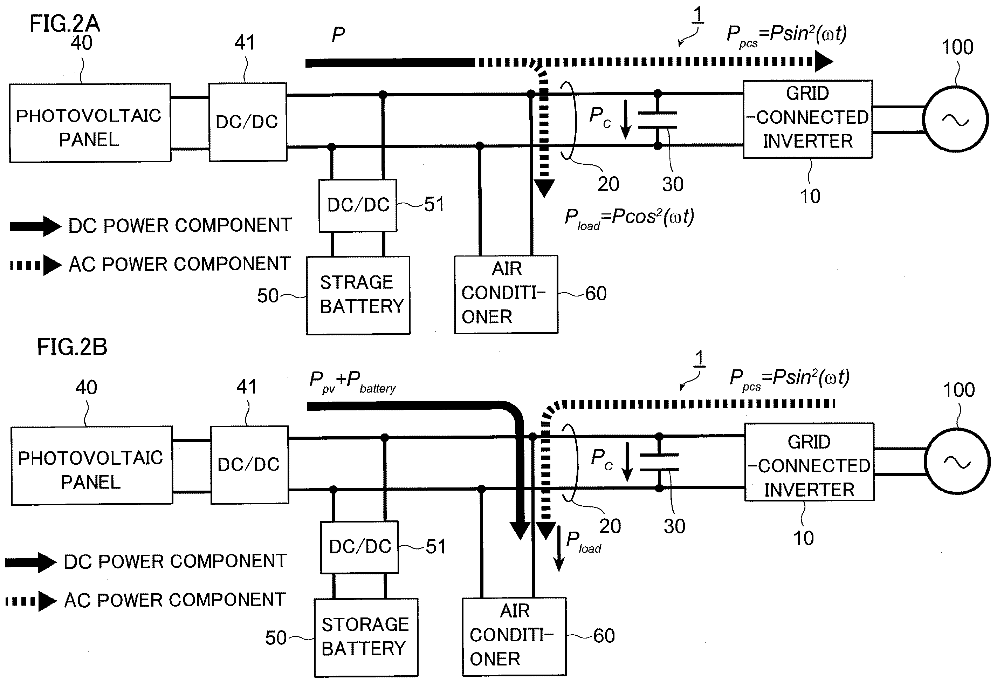

FIGS. 2A and 2B illustrate schematic energy flow during the reverse and forward power flow operations of the grid-connected inverter 10, where FIG. 2A illustrates energy flow during the reverse power flow operation, and FIG. 2B illustrates energy flow during the forward power flow operation. In FIGS. 2A and 2B, the flow of the DC component power (denoted as "DC Power Component" in the figure) is indicated by solid arrows, while the flow of the AC component power (denoted as "AC Power Component" in the figure) is indicated by dashed arrows.

In the reverse power flow operation shown in FIG. 2A, the grid-connected inverter 10 converts DC power into AC power, thereby supplying power $P_{pcs}$ from the DC link unit 20 side to the single-phase AC power supply 100 side. Of the DC power $P$ supplied from the photovoltaic panel 40 and the storage battery 50, the power $Pcos^2(\omega t)$ is consumed by the air conditioner 60, and the remaining power $Psin^2(\omega t)$ is supplied to the single-phase AC power supply 100 side via the grid-connected inverter 10. In the reverse power flow operation, the DC load splits the DC power into two AC power components, thereby modulating the power consumed by the DC load to cancel out the power ripple generated in the grid-connected inverter 10.

In the forward power flow operation shown in FIG. 2B, the grid-connected inverter 10 converts AC power into DC power, thereby supplying power from the single-phase AC power supply 100 side to the DC link unit 20 side. The air conditioner 60 consumes DC power $P_{pv} + P_{battery}$, which is the sum of the DC power $P_{pv}$ supplied by the photovoltaic panel 40 and the DC power $P_{battery}$ supplied by the storage battery 50. In addition, the air conditioner 60 consumes the power ripple $Psin^2(\omega t)$ supplied from the grid-connected inverter 10. In the forward power flow operation, the power ripple in the DC link unit 20 is directly delivered to the DC load. As the DC load consumes the power ripple $P \cdot sin^2(\omega t)$, it cancels out the power ripple generated in the grid-connected inverter 10.

In both the reverse and forward power flow operations shown in FIGS. 2A and 2B, the power ripple generated in the grid-connected inverter 10 is consumed by the air conditioner 60, thereby preventing the propagation of the power ripple to the DC power sources such as the photovoltaic panel 40 and the storage battery 50.

In the power system 1 of the present disclosure, the power to be consumed by the electric device, such as the air conditioner 60, is modulated in accordance with the operation of the grid-connected inverter 10, thereby canceling out the power ripple generated in the grid-connected inverter 10. The electric device has a power ripple adjustment function to adjust the power ripple. Without such a power ripple adjustment function of the electric device, it has been necessary to reduce the power ripple using a large-capacitance smoothing capacitor 30. In the power system 1 of the present disclosure, the power ripple generated in the grid-connected inverter 10 is canceled using the power ripple adjustment function of the electric device, which consumes the DC power. This allows for a reduction in capacitance of the smoothing capacitor 30.

(Example 1)

In Example 1, the power ripple component with the frequency of $2\omega$, which is twice that of the single-phase AC power supply 100, is absorbed as much as possible by the smoothing capacitor 30, and the remaining portion of the component that cannot be absorbed by the smoothing capacitor 30 is absorbed by the DC load (in this example, the air conditioner 60).

The power $P_C$ of the smoothing capacitor 30 is expressed by following Equation (6). The power $P_C$ of the smoothing capacitor 30 includes AC component power $P_{C\_ac}$ with the frequency of $2\omega$, which is twice that of the single-phase AC power supply 100, and DC component power $P_{C\_dc}$. The AC component power $P_{C\_ac}$ is the power ripple component to be absorbed by the smoothing capacitor 30. The AC component power $P_{C\_ac}$ is referred to as the power ripple component $P_{C\_ac}$. The maximum absolute value $|P_{C\_ac}|$ of the power ripple component $P_{C\_ac}$ is defined as a maximum power ripple component $P_{C100}$ ($P_{C100} > 0$). The maximum power ripple component $P_{C100}$ represents the maximum value of the power ripple component $P_{C\_ac}$ that can be absorbed by the smoothing capacitor 30. The maximum power ripple component $P_{C100}$ is an example of the predetermined threshold.

[Math. 4]

$$P_C = P_{C\_ac}\, cos(2\omega t) + P_{C\_dc} \qquad \cdots\cdots (6)$$

The power ripple component $P_{load\_ac}$ to be consumed by the air conditioner 60 is determined based on the relationship between the power ripple component $P_{pcs\_ac}$ in the power $P_{pes}$ of the grid-connected inverter 10 and the maximum power ripple component $P_{C100}$.

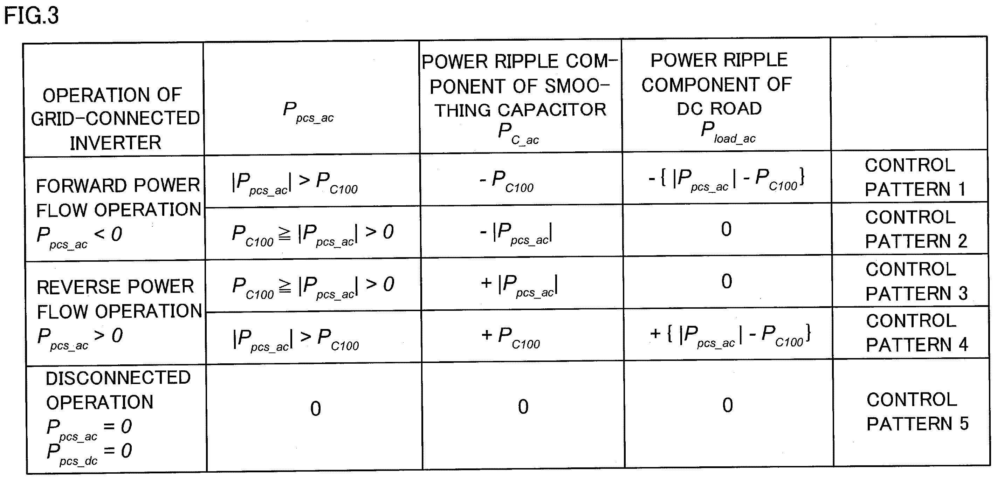

FIG. 3 is a table showing the power ripple component $P_{C\_ac}$ absorbed by the smoothing capacitor 30 and the power ripple component $P_{load\_ac}$ consumed by the DC load (in this example, the air conditioner 60). This table classifies the control patterns based on the relationship between the power ripple component $P_{pcs\_ac}$ in the grid-connected inverter 10 and the maximum power ripple component $P_{C100}$. The power ripple component $P_{pcs\_ac}$ is shown in absolute values.

The grid-connected inverter 10 performs the forward power flow operation in control patterns 1 and 2, the reverse power flow operation in control patterns 3 and 4, and the disconnected operation in control pattern 5. In the forward power flow operation, the power ripple component $P_{pcs\_ac}$ is negative ($P_{pcs\_ac} < 0$). In the reverse power flow operation, the power ripple component $P_{pcs\_ac}$ is positive ($P_{pcs\_ac} > 0$). In the disconnected operation, the power ripple component $P_{pcs\_ac}$ and the DC power component $P_{pcs\_dc}$ are zero ("0") ($P_{pcs\_ac} = 0$, $P_{pcs\_dc} = 0$).

Control pattern 1 corresponds to the forward power flow operation and is applied when the absolute value of the power ripple component $P_{pcs\_ac}$ exceeds the maximum power ripple component $P_{C100}$ ($|P_{pcs\_ac}| > P_{C100}$). In this case, even if the smoothing capacitor 30 absorbs the portion of the power ripple component $P_{pcs\_ac}$ corresponding to the maximum power ripple component $P_{C100}$, a power ripple component ($|P_{pcs\_ac}| - P_{C100}$) in excess of the maximum power ripple component $P_{C100}$ still remains. The DC load consumes this remaining power ripple component ($|P_{pcs\_ac}| - P_{C100}$).

Control pattern 2 corresponds to the forward power flow operation and is applied when the absolute value of the power ripple component $P_{pcs\_ac}$ is less than or equal to the maximum power ripple component $P_{C100}$ ($P_{C100} \geq |P_{pcs\_ac}| > 0$). In this case, the entire power ripple component $P_{pcs\_ac}$ is absorbed by the smoothing capacitor 30 as it is within the maximum power ripple component $P_{C100}$. The DC load is not required to consume the power ripple component $P_{pcs\_ac}$ ($P_{load\_ac} = 0$).

Control pattern 3 corresponds to the reverse power flow operation and is applied when the absolute value of the power ripple component $P_{pcs\_ac}$ is less than or equal to the maximum power ripple component $P_{C100}$ ($P_{C100} \geq |P_{pcs\_ac}| > 0$). In this case, the entire power ripple component $P_{pcs\_ac}$ is absorbed by the smoothing capacitor 30 as it is within the maximum power ripple component $P_{C100}$. The DC load is not required to consume the power ripple component ($P_{load\_ac} = 0$).

Control pattern 4 corresponds to the reverse power flow operation and is applied when the absolute value of the power ripple component $P_{pcs\_ac}$ exceeds the maximum power ripple component $P_{C100}$ ($|P_{pcs\_ac}| > P_{C100}$). In this case, even if the smoothing capacitor 30 absorbs the portion of the power ripple component $P_{pcs\_ac}$ corresponding to the maximum power ripple component $P_{C100}$, a power ripple component ($|P_{pcs\_ac}| - P_{C100}$) in excess of the maximum power ripple component $P_{C100}$ still remains. The DC load consumes this remaining power ripple component ($|P_{pcs\_ac}| - P_{C100}$).

Control pattern 5 corresponds to the disconnected operation, in which the power $P_{pcs}$ of the grid-connected inverter 10 is zero ("0") ($P_{pcs\_ac} = 0$, $P_{pcs\_dc} = 0$). The grid-connected inverter 10 does not generate any power ripple component. The power ripple component $P_{C\_ac}$ absorbed by the smoothing capacitor 30 and the power ripple component $P_{load\_ac}$ consumed by the DC load electric device are both zero ("0") ($P_{C\_ac} = 0$, $P_{load\_ac} = 0$).

In the above example, control patterns are classified based on whether the absolute value of the power ripple component $P_{pcs\_dc}$ exceeds the maximum power ripple component $P_{C100}$ or whether it is less than or equal to the maximum power ripple component $P_{C100}$. Alternatively, control patterns may be classified based on whether the absolute value of the power ripple component $P_{pcs\_ac}$ is greater than or equal to the maximum power ripple component $P_{C100}$ or whether it is less than the maximum power ripple component $P_{C100}$.

The following discusses control patterns 1 to 5 with reference to energy flow diagrams.

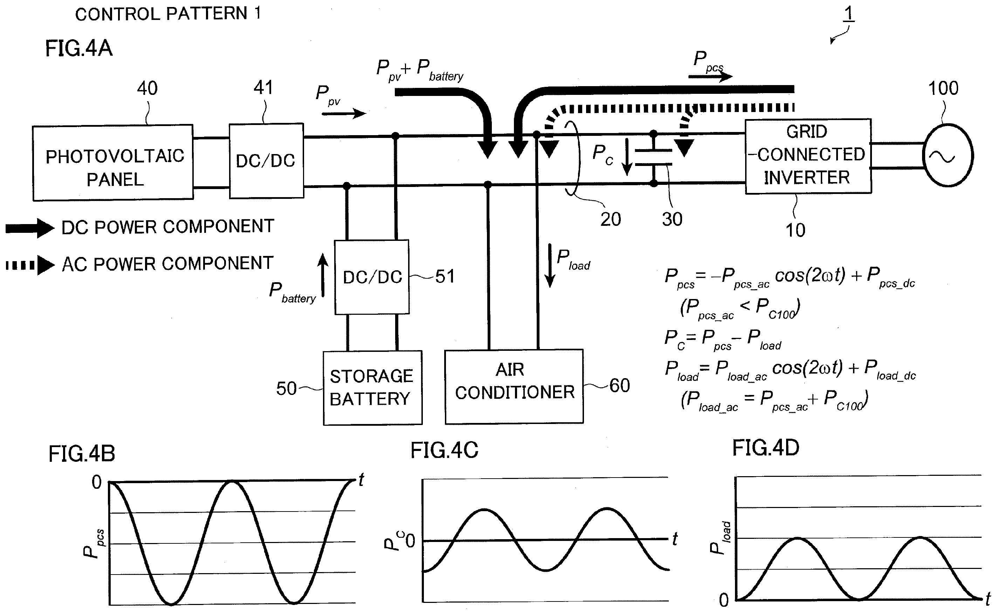

FIGS. 4A to 4D illustrate energy flow in control pattern 1, where FIG. 4A shows the energy flow, FIG. 4B shows the power $P_{pes}$ of the grid-connected inverter 10, FIG. 4C shows the power $P_C$ of the smoothing capacitor 30, and FIG. 4D shows the power $P_{load}$ of the DC load (in this example, the air conditioner 60). In FIGS. 4B to 4D, the horizontal axis represents time t. FIGS. 4B to 4D each show one cycle of the single-phase AC power supply 100. In FIG. 4A, the flow of the DC component power (denoted as "DC Power Component" in the figure) is indicated by solid arrows, while the flow of the AC component power (denoted as "AC Power Component" in the figure) is indicated by dashed arrows. The flow of the AC component power corresponds to the flow of the power ripple component. In the other figures shown below, descriptions of similar elements will be omitted.

Control pattern 1 corresponds to the forward power flow operation and is applied when the absolute value of the power ripple component $P_{pcs\_ac}$ exceeds the maximum power ripple component $P_{C100}$ ($|P_{pcs\_ac}| > P_{C100}$). In this case, the smoothing capacitor 30 absorbs the portion of the power ripple component $P_{pcs\_ac}$ corresponding to the maximum power ripple component $P_{C100}$, and the air conditioner 60 consumes the remaining power ripple component ($|P_{pcs\_ac}| - P_{C100}$) (see the AC power component indicated by dashed arrows in FIG. 4A). The air conditioner 60 also consumes the sum ($P_{pv} + P_{battery}$) of the power $P_{pv}$ from the photovoltaic panel 40 and the power $P_{battery}$ from the storage battery 50, as well as the DC power component $P_{pcs\_dc}$ supplied from the grid-connected inverter 10 to the DC link unit 20. The sum ($P_{pv} + P_{battery}$) of the power $P_{pv}$ from the photovoltaic panel 40 and the power $P_{battery}$ from the storage battery 50 represents the DC power supplied from the DC power sources. The DC power ($-P_{pcs}$) supplied from the grid-connected inverter 10 to the DC link unit 20 is an example of the second DC power.

In control pattern 1, the power ripple adjustment function of the DC load electric device (in this example, the air conditioner 60) adjusts the power ripple component such that the DC power consumed by the electric device approaches the sum of the DC power supplied from the DC power sources and the second DC power. Control pattern 1 is an example of the second control mode. The power ripple adjustment function in this example includes power ripple component acquisition means for acquiring the power ripple component $P_{pcs\_ac}$, and power ripple phase acquisition means for acquiring a phase $2\omega t$ of the power ripple component with the frequency of $2\omega$, which is twice that of the single-phase AC power supply 100. The power ripple component acquisition means may be configured to detect the power ripple component by, for example, performing computational processing such as short-time Fourier transform on the power $P_{pes}$ measured by power measurement means. In another example, the power ripple component acquisition means may be configured to acquire a computed value from the grid-connected inverter 10. The power ripple phase acquisition means may be configured to detect the phase by, for example, performing computational processing such as short-time Fourier transform on the power $P_{pes}$ measured by power measurement means. In another example, the power ripple phase acquisition means may be configured to detect the phase by performing computational processing on a voltage phase $\omega t$ of the grid-connected inverter 10 detected by voltage phase detection means such as a phase-locked loop or a zero-crossing circuit. In still another example, the power ripple phase acquisition means may be configured to acquire a computed value from the grid-connected inverter 10. In still another example, the power ripple phase acquisition means may be configured to acquire the phase $2\omega t$ or to acquire the cosine value $\cos(2\omega t)$ of the phase $2\omega t$.

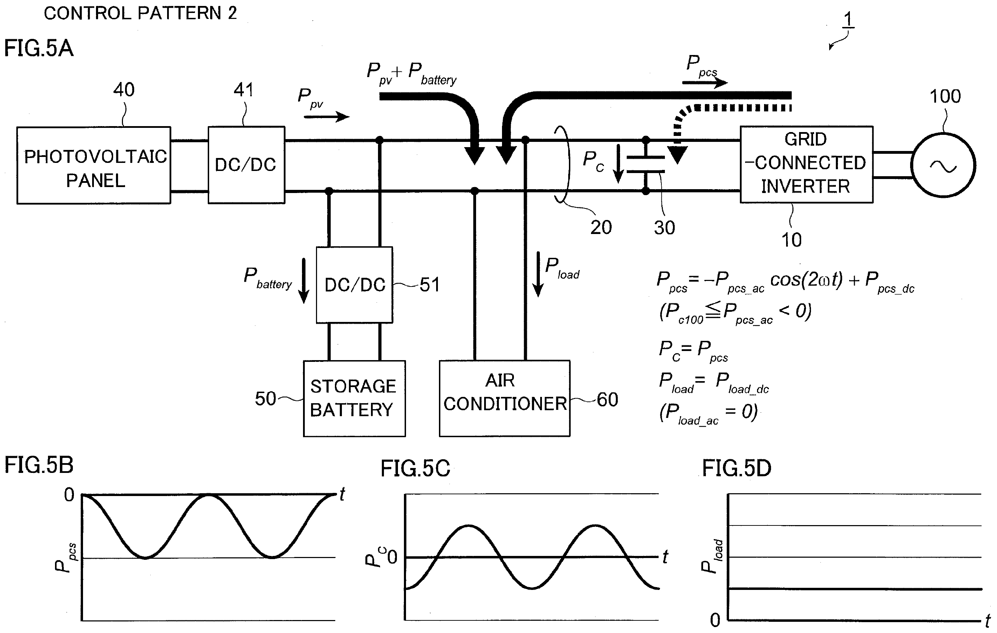

FIGS. 5A to 5D illustrate energy flow in control pattern 2, where FIG. 5A shows the energy flow, FIG. 5B shows the power $P_{pes}$ of the grid-connected inverter 10, FIG. 5C shows the power $P_C$ of the smoothing capacitor 30, and FIG. 5D shows the power $P_{load}$ of the DC load (in this example, the air conditioner 60).

Control pattern 2 corresponds to the forward power flow operation and is applied when the absolute value of the power ripple component $P_{pcs\_ac}$ is less than or equal to the maximum power ripple component $P_{C100}$ ($P_{C100} \geq |P_{pcs\_ac}| > 0$). In this case, the entire power ripple component $P_{pcs\_ac}$ is absorbed by the smoothing capacitor 30 as it is within the maximum power ripple component $P_{C100}$. The air conditioner 60 is not required to consume the power ripple component $P_{pcs\_ac}$ ($P_{load\_ac} = 0$). The power $P_{load}$ consumed by the air conditioner 60 consists only of the DC power component $P_{load\_dc}$ (see FIG. 5D). The DC power component $P_{load\_dc}$ consumed by the air conditioner 60 includes the sum ($P_{pv} + P_{battery}$) of the power $P_{pv}$ from the photovoltaic panel 40 and the power $P_{battery}$ from the storage battery 50, as well as the DC power component $P_{pes\_dc}$ supplied from the grid-connected inverter 10.

In control pattern 2, the power ripple adjustment function of the DC load electric device (in this example, the air conditioner 60) either adjusts the power ripple component to approach zero ("0") or does not adjust the power ripple component. Control pattern 2 is an example of the third control mode.

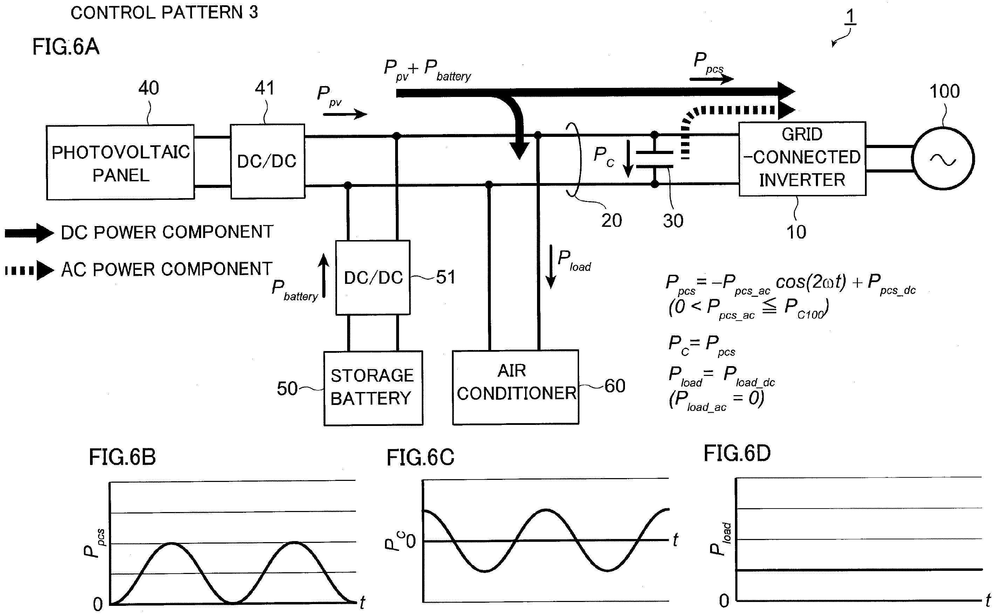

FIGS. 6A to 6D illustrate energy flow in control pattern 3, where FIG. 6A shows the energy flow, FIG. 6B shows the power $P_{pes}$ of the grid-connected inverter 10, FIG. 6C shows the power $P_C$ of the smoothing capacitor 30, and FIG. 6D shows the power $P_{load}$ of the DC load (in this example, the air conditioner 60).

Control pattern 3 corresponds to the reverse power flow operation and is applied when the absolute value of the power ripple component $P_{pcs\_ac}$ is less than or equal to the maximum power ripple component $P_{C100}$ ($P_{C100} \geq |P_{pcs\_ac}| > 0$). In this case, the entire power ripple component $P_{pcs\_ac}$ is absorbed by the smoothing capacitor 30 as it is within the maximum power ripple component $P_{C100}$. The air conditioner 60 is not required to consume the power ripple component ($P_{load\_ac} = 0$). The power $P_{load}$ consumed by the air conditioner 60 consists only of the DC power component $P_{load\_dc}$ (see FIG. 6D). The DC power component $P_{load\_dc}$ consumed by the air conditioner 60 is supplied from the sum ($P_{pv} + P_{battery}$) of the power $P_{pv}$ from the photovoltaic panel 40 and the power $P_{battery}$ from the storage battery 50.

In control pattern 3, the power ripple adjustment function of the DC load electric device (in this example, the air conditioner 60) may either adjust the power ripple component to approach zero or not adjust the power ripple component. Control pattern 3 is an example of the third control mode.

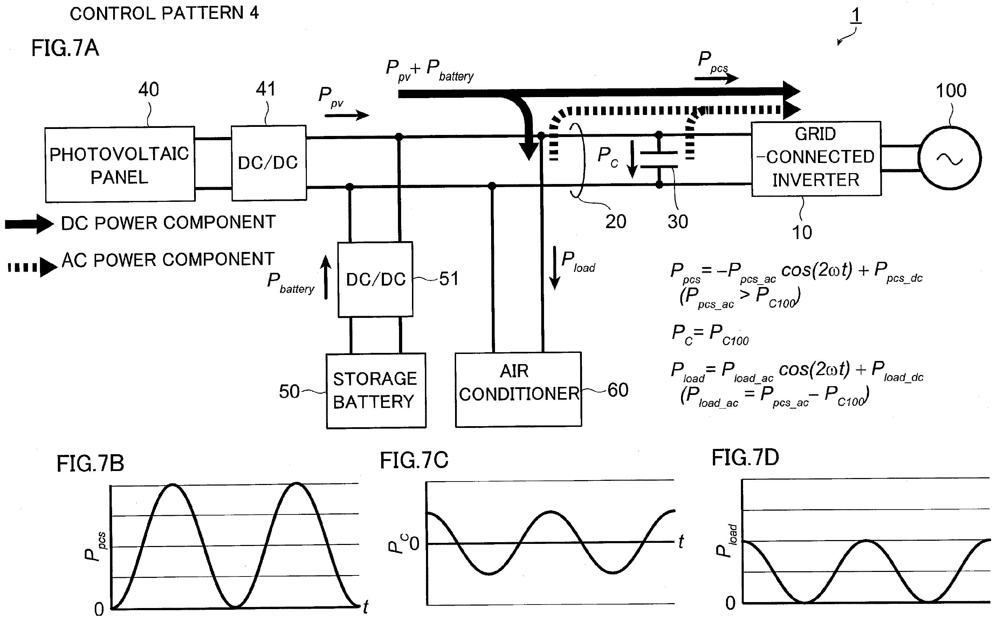

FIGS. 7A to 7D illustrate energy flow in control pattern 4, where FIG. 7A shows the energy flow, FIG. 7B shows the power $P_{pes}$ of the grid-connected inverter 10, FIG. 7C shows the power $P_C$ of the smoothing capacitor 30, and FIG. 7D shows the power $P_{load}$ of the DC load (in this example, the air conditioner 60).

Control pattern 4 corresponds to the reverse power flow operation and is applied when the absolute value of the power ripple component $P_{pcs\_ac}$ exceeds the maximum power ripple component $P_{C100}$ ($|P_{pcs\_ac}| > P_{C100}$). In the reverse power flow operation, the grid-connected inverter 10 converts DC power into AC power, thereby supplying the power $P_{pcs}$ from the DC link unit 20 side to the single-phase AC power supply 100 side. In this case, the smoothing capacitor 30 absorbs the portion of the power ripple component $P_{pcs\_ac}$ corresponding to the maximum power ripple component $P_{C100}$, and the air conditioner 60 consumes the remaining power ripple component ($|P_{pcs\_ac}| - P_{C100}$) (see the AC power component indicated by dashed arrows in FIG. 7). The air conditioner 60 consumes the DC power component that is obtained by subtracting the DC power component $P_{pcs\_dc}$, which is supplied from the DC link unit 20 to the grid-connected inverter 10, from the sum ($P_{pv} + P_{battery}$) of the power $P_{pv}$ from the photovoltaic panel 40 and the power $P_{battery}$ from the storage battery 50. The DC power $P_{pes}$ supplied from the DC link unit 20 to the grid-connected inverter 10 is an example of the first DC power.

In control pattern 4, the power ripple adjustment function of the DC load electric device (in this example, the air conditioner 60) adjusts the power ripple component such that the DC power consumed by the electric device approaches the power that is obtained by subtracting the first DC power from the DC power supplied by the DC power sources. Control pattern 4 is an example of the first control mode.

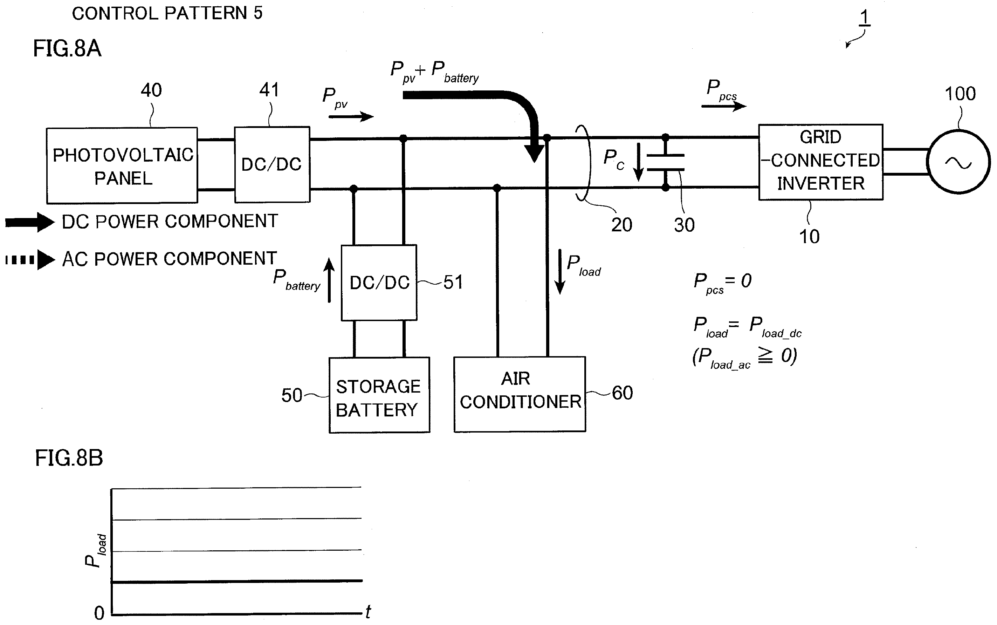

FIGS. 8A and 8B illustrate energy flow in control pattern 5, where FIG. 8A shows the energy flow, and FIG. 8B shows the power $P_{load}$ of the DC load (in this example, the air conditioner 60).

Control pattern 5 corresponds to the disconnected operation, in which the power $P_{pes}$ of the grid-connected inverter 10 is zero ("0") ($P_{pcs} = 0$). The power ripple component $P_{load\_ac}$ consumed by the air conditioner 60 is also zero ("0"). The air conditioner 60 consumes power that is the sum ($P_{pv} + P_{battery}$) of the power $P_{pv}$ from the photovoltaic panel 40 and the power $P_{battery}$ from the storage battery 50.

In control pattern 5, the power ripple adjustment function of the DC load electric device (in this example, the air conditioner 60) either adjusts the power ripple component to approach zero ("0") or does not adjust the power ripple component. Control pattern 5 is an example of the third control mode.

(Variant of Example 1)

In Example 1, a single air conditioner 60 is used as the DC load. In one variant, multiple DC loads may be provided.

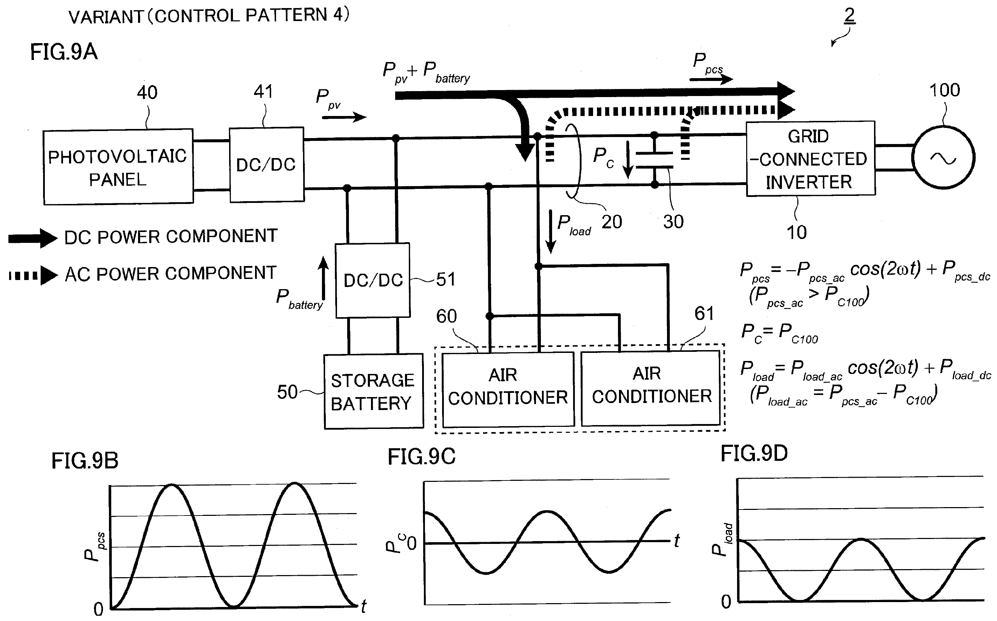

FIGS. 9A to 9D illustrate energy flow in a power system 2 according to a variant, where FIG. 9A shows the energy flow, FIG. 9B shows the power $P_{pes}$ of the grid-connected inverter 10, FIG. 9C shows the power $P_C$ of the smoothing capacitor 30, and FIG. 9D shows the power $P_{load}$ of a DC load group (in this example, air conditioners 60, 61). FIGS. 9A to 9D correspond to control pattern 4 shown in FIGS. 7A to 7D.

The power system 2 includes an air conditioner 61, in addition to the air conditioner 60. The air conditioner 61 is coupled to the DC link unit 20 in parallel with the air conditioner 60. The air conditioners 60, 61 constitute a DC load group. Other components are the same as those in the power system 1 shown in FIG. 1 and are thus identified by the same reference numerals and their descriptions are omitted.

In the power system 2, the power $P_{load}$ is controlled by the DC load group, composed of the air conditioners 60, 61. It goes without saying that the DC load group may either consume the ripple power component with only one device in the group or may share the consumption among multiple devices in the group.

(Example 2)

In the power system 1 of Example 1, the power ripple component with the frequency of $2\omega$, which is twice that of the single-phase AC power supply 100, is absorbed by the smoothing capacitor 30, and any portion thereof that cannot be absorbed is then consumed by the DC load (in this example, the air conditioner 60). In a power system 3 of Example 2, the power ripple component is consumed by the DC load, and any portion thereof that cannot be consumed is then absorbed by the smoothing capacitor 30. Example 2 represents an implementation in which the roles of the smoothing capacitor 30 and the DC load in Example 1 are interchanged.

In the power system 3, the maximum value of the power ripple component that can be consumed by the DC load (in this example, the air conditioner 60) is set to one-half of the DC power component $P_{load\_dc}$ (i.e., the maximum power ripple component = $P_{load\_dc}/2$), for example. Increasing the maximum value may lead to sharp fluctuations in the power supplied to the DC load, with the consequent risk of adversely affecting the air conditioning performance.

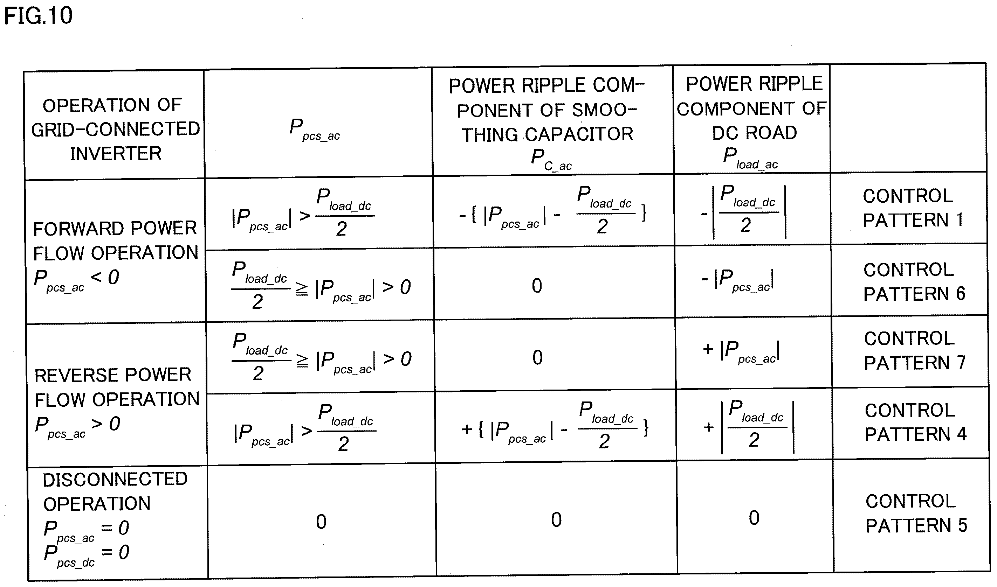

FIG. 10 is a table showing the power ripple component $P_{C\_ac}$ absorbed by the smoothing capacitor 30 and the power ripple component $P_{load\_ac}$ consumed by the DC load (in this example, the air conditioner 60). This table classifies the control patterns based on the relationship between the power ripple component $P_{pcs\_dc}$ in the grid-connected inverter 10 and the maximum power ripple component $P_{load\_dc}/2$. FIG. 10 shows an implementation in which the power ripple component $P_{C\_ac}$ absorbed by the smoothing capacitor 30 and the power ripple component $P_{load\_ac}$ consumed by the DC load (in this example, the air conditioner 60) shown in FIG. 3 are interchanged, and further the maximum power ripple component $P_{C100}$ is replaced with the maximum power ripple component $P_{load\_dc}/2$.

In FIG. 10, control patterns are classified based on whether the absolute value of the power ripple component $P_{pcs\_ac}$ exceeds the maximum power ripple component $P_{load\_dc}/2$ or whether it is less than or equal to the maximum power ripple component $P_{load\_dc}/2$. Alternatively, control patterns may be classified based on whether the absolute value of the power ripple component $P_{pcs\_ac}$ is greater than or equal to the maximum power ripple component $P_{load\_dc}/2$ or whether it is less than $P_{load\_dc}/2$.

The energy flow in control pattern 1 in FIG. 10 is the same as that in control pattern 1 of Example 1 shown in FIG. 4A, and thus it is also referred to as control pattern 1. Similarly, the energy flow in control pattern 4 in FIG. 10 is the same as that in control pattern 4 of Example 1 shown in FIG. 7A, and thus it is also referred to as control pattern 4. Likewise, the energy flow in control pattern 5 in FIG. 10 is the same as that in control pattern 5 of Example 1 shown in FIG. 8A, and thus it is also referred to as control pattern 5.

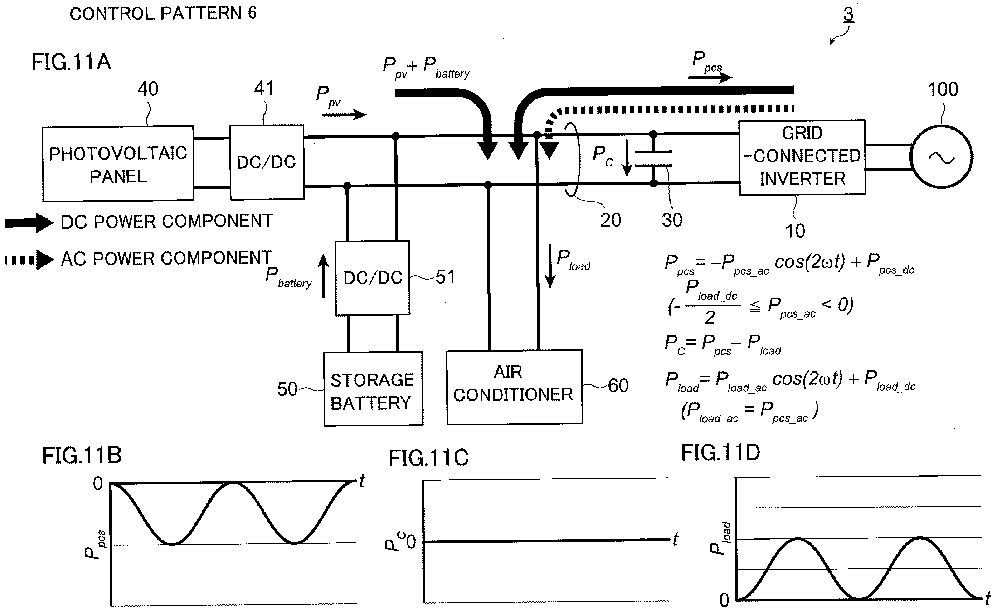

FIGS. 11A to 11D illustrate energy flow in control pattern 6, where FIG. 11A shows the energy flow, FIG. 11B shows the power $P_{pes}$ of the grid-connected inverter 10, FIG. 11C shows the power $P_C$ of the smoothing capacitor 30, and FIG. 11D shows the power $P_{load}$ of the DC load (in this example, the air conditioner 60).

Control pattern 6 corresponds to the forward power flow operation and is applied when the absolute value of the power ripple component $P_{pcs\_ac}$ of the grid-connected inverter 10 is less than or equal to the maximum power ripple component $P_{load\_dc}/2$ that can be consumed by the air conditioner 60 ($P_{load\_dc}/2 \geq |P_{pcs\_ac}| > 0$). In this case, the entire power ripple component $P_{pcs\_ac}$ is consumed by the air conditioner 60. The smoothing capacitor 30 is not required to absorb the power ripple component. The flow path of the power ripple component in the energy flow shown in FIG. 11A differs from that in control pattern 3 shown in FIG. 5A. In FIG. 5A, the power ripple component is supplied from the grid-connected inverter 10 to the smoothing capacitor 30. In FIG. 11A, the power ripple component is supplied from the grid-connected inverter 10 to the air conditioner 60. The air conditioner 60 consumes the sum ($P_{pv} + P_{battery}$) of the power $P_{pv}$ from the photovoltaic panel 40 and the power $P_{battery}$ from the storage battery 50, as well as the DC power component $P_{pcs\_dc}$ supplied from the grid-connected inverter 10 to the DC link unit 20.

In control pattern 6, the power ripple adjustment function of the DC load electric device (in this example, the air conditioner 60) adjusts the power ripple component such that the DC power consumed by the electric device approaches the sum of the DC power supplied from the DC power sources and the second DC power. Control pattern 6 is an example of the second control mode.

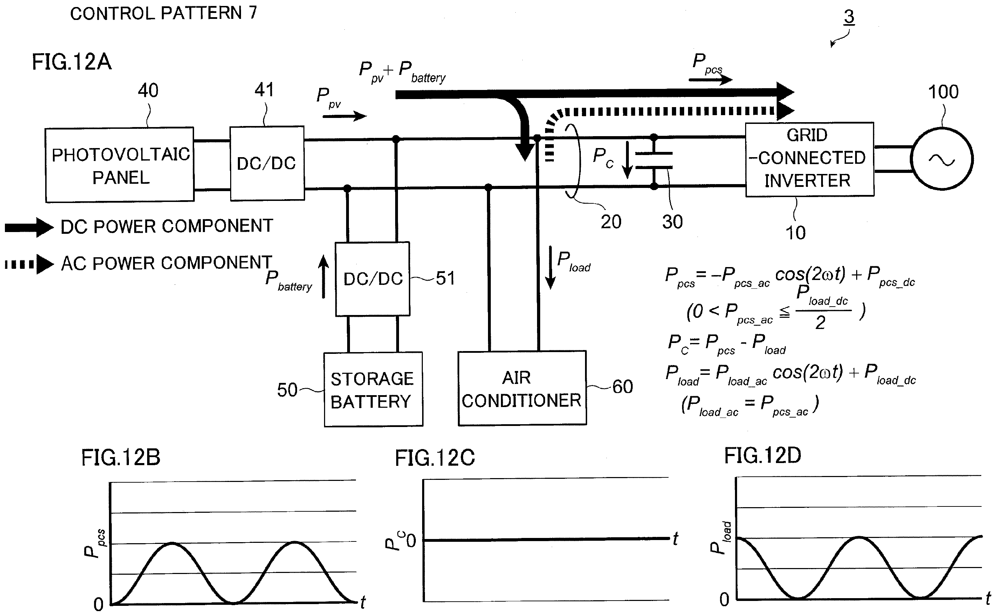

FIGS. 12A to 12D illustrate energy flow in control pattern 7, where FIG. 12A shows the energy flow, FIG. 12B shows the power $P_{pes}$ of the grid-connected inverter 10, FIG. 12C shows the power $P_C$ of the smoothing capacitor 30, and FIG. 12D shows the power $P_{load}$ of the DC load (in this example, the air conditioner 60).

Control pattern 7 corresponds to the reverse power flow operation and is applied when the absolute value of the power ripple component $P_{pcs\_ac}$ is less than or equal to the maximum power ripple component $P_{load\_dc}/2$ that can be consumed by the air conditioner 60 ($P_{load\_dc}/2 \geq |P_{pcs\_ac}| > 0$). In this case, the entire power ripple component $P_{pcs\_ac}$ is consumed by the air conditioner 60. The smoothing capacitor 30 is not required to absorb the power ripple component. The flow path of the power ripple component in the energy flow shown in FIG. 12A differs from that in control pattern 3 shown in FIG. 6A. In FIG. 6A, the power ripple component $P_{pcs\_ac}$ is supplied from the smoothing capacitor 30 to the grid-connected inverter 10. In FIG. 12A, the power ripple component $P_{pcs\_ac}$ is supplied from the air conditioner 60 to the grid-connected inverter 10. The air conditioner 60 consumes the DC power that is obtained by subtracting the DC power component $P_{pcs\_dc}$, which is supplied from the DC link unit 20 to the grid-connected inverter 10, from the sum ($P_{pv} + P_{battery}$) of the power $P_{pv}$ from the photovoltaic panel 40 and the power $P_{battery}$ from the storage battery 50.

In control pattern 7, the power ripple adjustment function of the DC load electric device (in this example, the air conditioner 60) adjusts the power ripple component such that the DC power consumed by the electric device approaches the DC power that is obtained by subtracting the first DC power from the DC power supplied by the DC power sources. Control pattern 7 is an example of the first control mode.

In Example 2 as well, multiple DC loads may be provided, similarly to the above variant of Example 1.

The relationship between the voltage phase $\omega t$ of the single-phase AC power supply 100 and the phase $2\omega t$ of the

power ripple component with the frequency $2\omega$, which is twice that of the single-phase AC power supply 100, in control pattern 6 (see FIGS. 10 and 11A to 11D) and control pattern 7 (see FIGS. 10 and 12A to 12D) is now described.

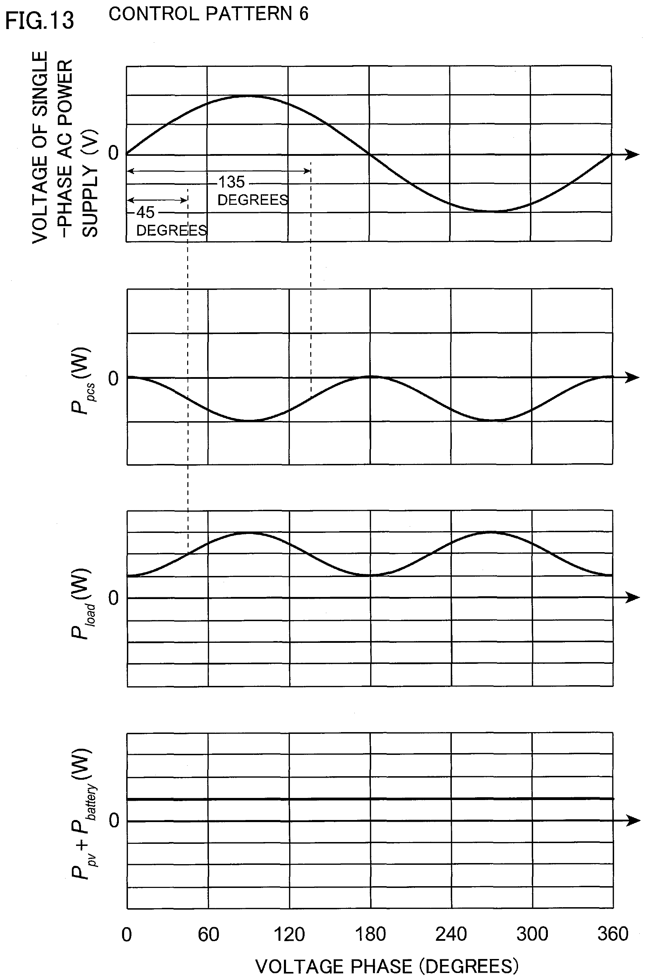

FIG. 13 illustrates the phase relationship in control pattern 6. In FIG. 13, from top to bottom, the voltage waveform of the single-phase AC power supply 100, the waveform of the power $P_{pcs}$ of the grid-connected inverter 10, the waveform of the power $P_{load}$ of the air conditioner 60, which is the DC load, the waveform of the power $P_{pv}$ of the photovoltaic panel 40, and the waveform of the power $P_{battery}$ of the storage battery 50 are shown. Each horizontal axis represents the voltage phase (in degrees) of the single-phase AC power supply 100. FIG. 13 shows one cycle of the voltage of the single-phase AC power supply 100. Each vertical axis represents power (W), with the central arrow corresponding to zero ("0") power.

FIG. 13 shows the case where the power factor is 1. The phase difference between the voltage and current of the single-phase AC power supply 100 is either 0 degrees or 180 degrees. The phase difference between the voltage and current varies depending on the power factor.

Control pattern 6 corresponds to the forward power flow operation, in which the power $P_{pcs}$ is negative ($P_{pcs} < 0$). The phase difference between the voltage and the ripple generated in the power $P_{pcs}$ is 135 degrees. Assuming that the voltage of the single-phase AC power supply 100 is $|E_s|\sin(\omega t)$, the ripple generated in the power $P_{pcs}$ is expressed as $|P_{pcs\_ac}|\sin(2(\omega t - 135°))$. In control pattern 6, the entire power ripple component $P_{pcs\_ac}$ is consumed by the air conditioner 60. The power waveform of the air conditioner 60 may be modulated with a phase difference of 45 degrees relative to the voltage so as to cancel out the ripple in the power $P_{pcs}$. The power ripple adjustment function of the air conditioner 60 adjusts the power ripple component of the power $P_{load}$ such that the phase difference relative to the voltage approaches 45 degrees. In other words, the power ripple adjustment function of the air conditioner 60 adjusts the power ripple component of the power $P_{load}$ such that the power ripple component approaches $|P_{load\_ac}|\sin(2(\omega t - 45°))$ relative to the voltage $|E_s|\sin(\omega t)$ of the single-phase AC power supply 100. The sum of the power $P_{pv}$ from the photovoltaic panel 40 and the power $P_{battery}$ from the storage battery 50 is constant and is not affected by the power ripple.

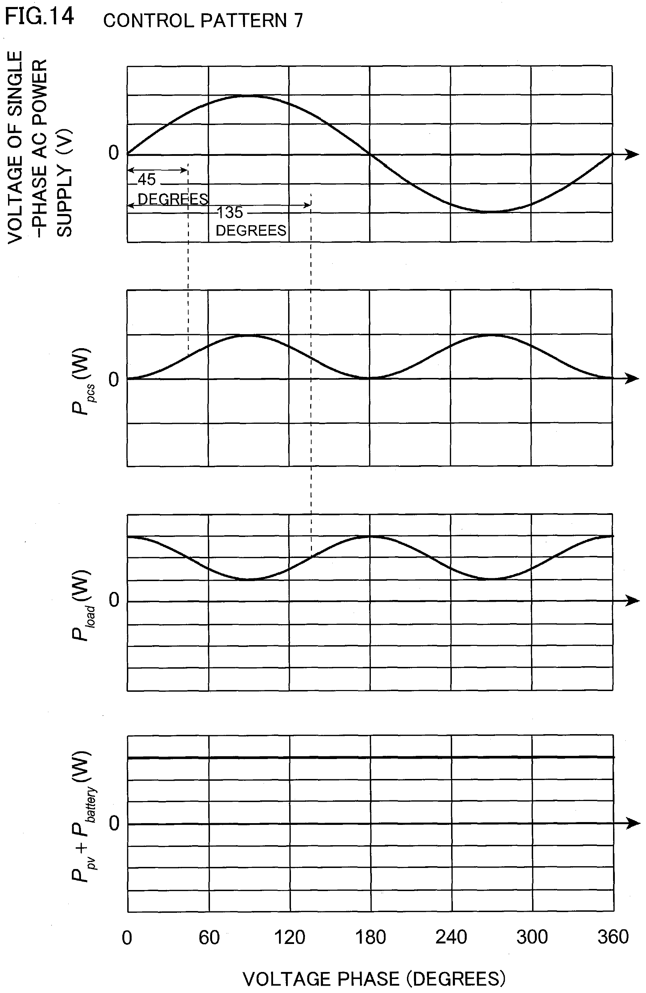

FIG. 14 illustrates the phase relationship in control pattern 7. In FIG. 14, from top to bottom, the voltage waveform of the single-phase AC power supply 100, the waveform of the power $P_{pcs}$ of the grid-connected inverter 10, the waveform of the power $P_{load}$ of the air conditioner 60, which is the DC load, the waveform of the power $P_{pv}$ of the photovoltaic panel 40, and the waveform of the power $P_{battery}$ of the storage battery 50 are shown. Each horizontal axis represents the voltage phase (in degrees) of the single-phase AC power supply 100. FIG. 14 shows one cycle of the voltage of the single-phase AC power supply 100. Each vertical axis represents power (W), with the central arrow corresponding to zero ("0") power. Similarly to FIG. 13, FIG. 14 shows the case where the power factor is 1.

Control pattern 7 corresponds to the reverse power flow operation, in which the power $P_{pcs}$ is positive ($P_{pcs} > 0$). The phase difference between the voltage and the ripple generated in the power $P_{pcs}$ is 45 degrees. Assuming that the voltage of the single-phase AC power supply 100 is $|E_s|\sin(\omega t)$, the ripple generated in the power $P_{pcs}$ is expressed as $|P_{pcs\_ac}|\sin(2(\omega t - 45°))$. In control pattern 7, the entire power ripple component $P_{pcs\_ac}$ is consumed by the air conditioner 60. The power waveform of the air conditioner 60 may be modulated with a phase difference of 135 degrees relative to the voltage so as to cancel out the ripple in the power $P_{pcs}$. The power ripple adjustment function of the air conditioner 60 adjusts the power ripple component of the power $P_{load}$ such that the phase difference relative to the voltage approaches 135 degrees. In other words, the power ripple adjustment function of the air conditioner 60 adjusts the power ripple component of the power $P_{load}$ such that the power ripple component approaches $|P_{load\_ac}|\sin(2(\omega t - 135°))$ relative to the voltage $|E_s|\sin(\omega t)$ of the single-phase AC power supply 100.

In control pattern 1, which corresponds to the forward power flow operation in which the power $P_{pcs}$ is negative (-), the power ripple component of the power $P_{load}$ may be adjusted such that it is modulated with a phase difference of 45 degrees relative to the voltage of the single-phase AC power supply 100, as in control pattern 6. In control pattern 4, which corresponds to the reverse power flow operation in which the power $P_{pcs}$ is positive (+), the power ripple component of the power $P_{load}$ may be adjusted such that it is modulated with a phase difference of 135 degrees relative to the voltage of the single-phase AC power supply 100, as in control pattern 7. It is self-evident that the power $P_{pcs}$ of the grid-connected inverter 10 has a 90-degree phase shift relative to the voltage waveform of the single-phase AC power supply 100 in each of the forward and reverse power flow operations.

While the power system 1 of Example 1, the power system 2 of the comparative example, and the power system 3 of Example 2 each include the photovoltaic panel 40 and the storage battery 50 as examples of the DC power source, these power systems may each include only one of the photovoltaic panel 40 and the storage battery 50. The power system 1 of Example 1, the power system 2 of the comparative example, and the power system 3 of Example 2 may include an additional DC power source(s). These power systems may each include two or more photovoltaic panels 40 and two or more DC/DC converters 41, and/or include two or more storage batteries 50 and two or more DC/DC converters 51.

The power system 1 of Example 1 and the power system 3 of Example 2 each include the air conditioner 60 as an example of the DC load electric device. The air conditioner 60 may include a rotary electric machine and may be configured to adjust the rotational speed or torque of the rotary electric machine. A rotary electric machine driven via an inverter can have its rotational speed modulated at the frequency of $2\omega$, which is twice that of the single-phase AC power supply 100, by means of a control signal to control the inverter. Similarly, a rotary electric machine driven via an inverter can have its torque modulated at the frequency of $2\omega$, which is twice that of the single-phase AC power supply 100, by means of a control signal to control the inverter. Even if the rotational speed or torque of the rotating electric machine is modulated, the temperature of the space controlled by the air conditioner 60 equipped with the rotary electric machine is not significantly affected by such modulation.

The DC load electric device may be a heat pump device equipped with a heat pump unit for circulating a heat medium. Examples of such heat pump devices include air conditioners, hot water supply apparatuses, chiller units, and cooling apparatuses for cooling the air inside a storage space. Air conditioners may be cooling-only units, heating-only units, or those capable of switching between cooling and heating. Cooling apparatuses are used to cool the air inside refrigerators, freezers, containers, and the like. Even if the power supplied from the power source is modulated at the frequency of $2\omega$, which is twice that of the single-phase AC power supply 100, the temperature controlled by the heat pump device is not significantly affected by such modulation.

While the air conditioner 60 and heat pump device have been described as examples of the DC load electric device, the teachings of the present disclosure are not limited to the air conditioner 60 and heat pump device. The electric device used may be any device that is not significantly affected by power modulation even if its consumed power is modulated at the frequency of $2\omega$, which is twice that of the single-phase AC power supply 100. Examples of such devices include heat storage devices, such as electric water heaters, as well as fans and ventilation fans.

(Effects and advantages of embodiment)

The power systems 1, 2, and 3 of the present embodiment each include: the DC link unit 20; the grid-connected inverter 10 coupled to the DC link unit 20 and configured to be couplable to the single-phase AC power supply 100, the grid-connected inverter 10 including a forward power flow operation and a reverse power flow operation, the forward power flow operation being an operation in which AC power supplied from the single-phase AC power supply 100 is converted into DC power and supplied to the DC link unit 20, the reverse power flow operation being an operation in which DC power supplied from the DC link unit 20 is converted into AC power and supplied to the single-phase AC power supply 100; at least one DC power source (e.g., the photovoltaic panel 40 and the storage battery 50) coupled to the DC link unit 20 and configured to supply DC power to the DC link unit 20; the smoothing capacitor 30 coupled to the DC link unit 20 and configured to smooth the DC voltage of the DC link unit 20; and at least one electric device (e.g., the air conditioners 60, 61 and heat pump device) coupled to the DC link unit 20 and configured to consume DC power supplied from the DC link unit 20. The electric device includes a power ripple adjustment function to adjust a power ripple component in the DC power consumed by the electric device in accordance with the operation of the grid-connected inverter 10 and the voltage phase of the single-phase AC power supply 100, the power ripple component being a frequency component at an integer multiple of two or more of the power supply frequency of the single-phase AC power supply. This feature allows the power ripple component to be adjusted in accordance with the operation of the grid-connected inverter 10.

In the power systems 1, 2, and 3 of the present embodiment, the grid-connected inverter 10 includes a disconnected operation, in which neither conversion from AC power to DC power nor from DC power to AC power is performed. During the grid-connected inverter 10 performing the disconnected operation, the power ripple adjustment function of the electric device either adjusts the power ripple component to approach zero or does not adjust the power ripple component. This feature allows the power ripple component to be adjusted in accordance with the disconnected operation of the grid-connected inverter 10.

In the power systems 1, 2, and 3 of the present embodiment, the power ripple adjustment function of the electric device adjusts the power ripple component in the DC power supplied from the DC link unit 20 to the DC power source or the smoothing capacitor 30 such that a frequency component at twice the power supply frequency contained in the power ripple component is reduced. This feature allows for adjustment of the power ripple component generated in single-phase AC.

In the power systems 1, 2, and 3 of the present embodiment, the power ripple adjustment function of the electric device adjusts the amplitude of the frequency component at twice the power supply frequency contained in the power ripple component, as well as the phase difference between the voltage of the single-phase AC power supply 100 and the frequency component at twice the power supply frequency contained in the power ripple component. This feature facilitates adjustment of the power ripple component.

In the power systems 1, 2, and 3 of the present embodiment, the power ripple adjustment function of the electric device includes a first control mode. The first control mode is a mode in which, during the grid-connected inverter 10 performing the reverse power flow operation to supply first DC power from the DC link unit 20 to the grid-connected inverter 10, the power ripple component is adjusted such that the DC power consumed by the electric device approaches DC power that is obtained by subtracting the first DC power from the DC power supplied by the DC power source. This feature eliminates the need for reducing the output of the DC power source.

In the power systems 1, 2, and 3 of the present embodiment, the power ripple adjustment function of the electric device includes a second control mode. The second control mode is a mode in which, during the grid-connected inverter 10 performing the forward power flow operation to supply second DC power from the grid-connected inverter 10 to the DC link unit 20, the power ripple component is adjusted such that the DC power consumed by the electric device approaches DC power that is the sum of the DC power supplied by the DC power source and the second DC power. This feature eliminates the need for reducing the output of the DC power source.

In the power systems 1, 2, and 3 of the present embodiment, the power ripple adjustment function of the electric device includes a first control mode, a second control mode, and a third control mode. The first control mode is a mode in which the power ripple component is adjusted such that the DC power consumed by the electric device approaches DC power that is obtained by subtracting first DC power from the DC power supplied by the DC power source, the first DC power being DC power supplied from the DC link unit 20 to the grid-connected inverter 10. The second control mode is a mode in which the power ripple component is adjusted such that the DC power consumed by the electric device approaches DC power that is the sum of the DC power supplied by the DC power source and second DC power, the second DC power being DC power supplied from the grid-connected inverter 10 to the DC link unit 20. The third control mode is a mode in which the power ripple component is either adjusted to approach zero or is not adjusted. This feature allows the power ripple component to be adjusted in accordance with the operation of the grid-connected inverter 10.

In the power systems 1, 2, and 3 of the present embodiment, the grid-connected inverter 10 includes a disconnected operation in which neither conversion from AC power to DC power nor from DC power to AC power is performed. During the grid-connected inverter 10 performing the reverse power flow operation, the power ripple adjustment function of the electric device operates in the first control mode when the power ripple component exceeds a predetermined threshold, and operates in the third control mode when the power ripple component is less than or equal to the threshold. During the grid-connected inverter 10 performing the forward power flow operation, the power ripple adjustment function operates in the second control mode when the power ripple component exceeds the threshold, and operates in the third control mode when the power ripple component is less than or equal to the threshold. During the grid-connected inverter 10 performing the disconnected operation, the power ripple adjustment function operates in the third control mode. This feature can reduce ripples in the power consumed by the electric device.

In the power systems 1, 2, and 3 of the present embodiment, the grid-connected inverter 10 includes a disconnected operation in which neither conversion from AC power to DC power nor from DC power to AC power is performed. The power ripple adjustment function of the electric device operates in the first control mode during the grid-connected inverter 10 performing the reverse power flow operation, operates in the second control mode during the grid-connected inverter 10 performing the forward power flow operation, and operates in the third control mode during the grid-connected inverter 10 performing the disconnected operation. This feature can reduce the capacitance of the smoothing capacitor 30.

In the power systems 1, 2, and 3 of the present embodiment, the electric device includes a rotary electric machine and is configured to adjust the power ripple component by controlling the rotational speed or torque of the rotary electric machine. This feature prevents the effects of power ripples from becoming significant.

In the power systems 1, 2, and 3 of the present embodiment, the electric device is a power system that is a heat pump device including a heat pump unit. This feature prevents the effects of power ripples from becoming significant.

In the power systems 1, 2, and 3 of the present embodiment, the DC power source is a photovoltaic cell device. This feature facilitates interconnection with the power grid.

In the power systems 1, 2, and 3 of the present embodiment, the DC power source is an energy storage device. This feature facilitates interconnection with the power grid.

In the present embodiment, the electric device (e.g., the air conditioners 60 and 61 and heat pump device) is an electric device that is configured to consume DC power supplied from the DC link unit 20 and has a power ripple adjustment function to adjust a power ripple component in the DC power consumed by the electric device in accordance with the operation of the grid-connected inverter 10 coupled to the single-phase AC power supply 100, as well as the voltage phase of the single-phase AC power supply 100, the power ripple component being a frequency component at an integer multiple of two or more of the power supply frequency of the single-phase AC power supply 100, the operation of the grid-connected inverter 10 including a forward power flow operation and a reverse power flow operation, the forward power flow operation being an operation in which AC power supplied from the single-phase AC power supply 100 is converted into DC power and supplied to the DC link unit 20, the reverse power flow operation being an operation in which DC power supplied from the DC link unit 20 is converted into AC power and supplied to the single-phase AC power supply 100. This feature allows the power ripple component to be adjusted in accordance with the operation of the grid-connected inverter 10.

While the exemplary embodiment has been described above, it will be understood that various modifications to the forms and details may be made without departing from the spirit and scope of the appended claims.

Reference Signs List

1, 2, 3 Power system
10 Grid-connected inverter
20 DC link unit
30 Smoothing capacitor
40 Photovoltaic cell panel
41, 51 DC/DC converter
50 Battery
60, 61 Air conditioner
100 Single-phase AC power supply

**Claims**

1. A power system comprising:

   a DC link unit;
   a grid-connected inverter coupled to the DC link unit and configured to be couplable to a single-phase AC power supply, the grid-connected inverter including a forward power flow operation and a reverse power flow operation, the forward power flow operation being an operation in which AC power supplied from the single-phase AC power supply is converted into DC power and supplied to the DC link unit, the reverse power flow operation being an operation in which DC power supplied from the DC link unit is converted into AC power and supplied to the single-phase AC power supply;
   at least one DC power source coupled to the DC link unit and configured to supply DC power to the DC link unit;
   a smoothing capacitor coupled to the DC link unit and configured to smooth a DC voltage of the DC link unit; and
   at least one electric device coupled to the DC link unit and configured to consume DC power supplied from the DC link unit, wherein
   the at least one electric device includes a power ripple adjustment function to adjust a power ripple component in DC power consumed by the at least one electric device in accordance with an operation of the grid-connected inverter and a voltage phase of the single-phase AC power supply, the power ripple component being a frequency component at an integer multiple of two or more of a power supply frequency of the single-phase AC power supply.

2. The power system according to claim 1, wherein

   the grid-connected inverter includes a disconnected operation, in which neither conversion from AC power to DC power nor from DC power to AC power is performed, and
   during the grid-connected inverter performing the disconnected operation, the power ripple adjustment function of the at least one electric device either adjusts the power ripple component to approach zero or does not adjust the power ripple component.

3. The power system according to claim 1 or 2, wherein the power ripple adjustment function of the at least one electric device adjusts the power ripple component in DC power supplied from the DC link unit to the at least one DC power source or the smoothing capacitor such that a frequency component at twice the power supply frequency contained in the power ripple component is reduced.

4. The power system according to claim 1 or 2, wherein the power ripple adjustment function of the at least one electric device adjusts an amplitude of a frequency component at twice the power supply frequency contained in the power ripple component, as well as a phase difference between a voltage of the single-phase AC power supply and the frequency component at twice the power supply frequency contained in the power ripple component.

5. The power system according to claim 1 or 2, wherein the power ripple adjustment function of the at least one electric device includes a first control mode in which, during the grid-connected inverter performing the reverse power flow operation to supply first DC power from the DC link unit to the grid-connected inverter, the power ripple component is adjusted such that DC power consumed by the at least one electric device approaches DC power that is obtained by subtracting the first DC power from DC power supplied by the at least one DC power source.

6. The power system according to claim 1 or 2, wherein the power ripple adjustment function of the at least one electric device includes a second control mode in which, during the grid-connected inverter performing the forward power flow operation to supply second DC power from the grid-connected inverter to the DC link unit, the power ripple component is adjusted such that DC power consumed by the at least one electric device approaches DC power that is the sum of DC power supplied by the at least one DC power source and the second DC power.

7. The power system according to claim 1, wherein the power ripple adjustment function of the at least one electric device includes:

a first control mode in which the power ripple component is adjusted such that DC power consumed by the at least one electric device approaches DC power that is obtained by subtracting first DC power from DC power supplied by the at least one DC power source, the first DC power being DC power supplied from the DC link unit to the grid-connected inverter;

a second control mode in which the power ripple component is adjusted such that DC power consumed by the at least one electric device approaches DC power that is the sum of DC power supplied by the at least one DC power source and second DC power, the second DC power being DC power supplied from the grid-connected inverter to the DC link unit; and

a third control mode in which the power ripple component is either adjusted to approach zero or is not adjusted.

8. The power system according to claim 7, wherein

the grid-connected inverter includes a disconnected operation in which neither conversion from AC power to DC power nor from DC power to AC power is performed,

during the grid-connected inverter performing the reverse power flow operation, the power ripple adjustment function of the at least one electric device operates in the first control mode when the power ripple component exceeds a predetermined threshold, and operates in the third control mode when the power ripple component is less than or equal to the threshold,

during the grid-connected inverter performing the forward power flow operation, the power ripple adjustment function operates in the second control mode when the power ripple component exceeds the threshold, and operates in the third control mode when the power ripple component is less than or equal to the threshold, and

during the grid-connected inverter performing the disconnected operation, the power ripple adjustment function operates in the third control mode.

9. The power system according to claim 7, wherein

the grid-connected inverter includes an disconnected operation in which neither conversion from AC power to DC power nor from DC power to AC power is performed, and

the power ripple adjustment function of the at least one electric device operates in the first control mode during the grid-connected inverter performing the reverse power flow operation, operates in the second control mode during the grid-connected inverter performing the forward power flow operation, and operates in the third control mode during the grid-connected inverter performing the disconnected operation.

10. The power system according to claim 1 or 2, wherein the at least one electric device includes a rotary electric machine and is configured to adjust the power ripple component by controlling a rotational speed or torque of the rotary electric machine.

11. The power system according to claim 1 or 2, wherein the at least one electric device is a heat pump device including a heat pump unit.

12. The power system according to claim 1 or 2, wherein the at least one DC power source is a photovoltaic cell device.

13. The power system according to claim 1 or 2, wherein the at least one DC power source is an energy storage device.

14. An electric device configured to consume DC power supplied from a DC link unit, the electric device comprising: a power ripple adjustment function to adjust a power ripple component in DC power consumed by the electric device in accordance with an operation of a grid-connected inverter coupled to a single-phase AC power supply, as well as a voltage phase of the single-phase AC power supply, the power ripple component being a frequency component at an integer multiple of two or more of a power supply frequency of the single-phase AC power supply, the operation of the grid-connected inverter including a forward power flow operation and a reverse power flow operation, the forward power flow operation being an operation in which AC power supplied from the single-phase AC power supply is converted into DC power and supplied to the DC link unit, the reverse power flow operation being an operation in which DC power supplied from the DC link unit is converted into AC power and supplied to the single-phase AC power supply.

FIG.1

$P_{pv} = P_{pv\_dc}$     $(P_{pv} \geqq 0)$

$P_{battery} = P_{battery\_dc}$

$P_{load} = P_{load\_ac} cos(2\omega t) + P_{load\_dc}$     $(P_{load} \geqq 0)$

EP 4 637 016 A1

FIG.2A

FIG.2B

FIG.3

| OPERATION OF GRID-CONNECTED INVERTER | $P_{pcs\_ac}$ | POWER RIPPLE COMPONENT OF SMOOTHING CAPACITOR $P_{C\_ac}$ | POWER RIPPLE COMPONENT OF DC ROAD $P_{load\_ac}$ | |
|---|---|---|---|---|
| FORWARD POWER FLOW OPERATION $P_{pcs\_ac} < 0$ | $\|P_{pcs\_ac}\| > P_{C100}$ | $- P_{C100}$ | $- \{ \|P_{pcs\_ac}\| - P_{C100} \}$ | CONTROL PATTERN 1 |
| | $P_{C100} \geqq \|P_{pcs\_ac}\| > 0$ | $- \|P_{pcs\_ac}\|$ | $0$ | CONTROL PATTERN 2 |
| REVERSE POWER FLOW OPERATION $P_{pcs\_ac} > 0$ | $P_{C100} \geqq \|P_{pcs\_ac}\| > 0$ | $+ \|P_{pcs\_ac}\|$ | $0$ | CONTROL PATTERN 3 |
| | $\|P_{pcs\_ac}\| > P_{C100}$ | $+ P_{C100}$ | $+ \{ \|P_{pcs\_ac}\| - P_{C100} \}$ | CONTROL PATTERN 4 |
| DISCONNECTED OPERATION $P_{pcs\_ac} = 0$ $P_{pcs\_dc} = 0$ | $0$ | $0$ | $0$ | CONTROL PATTERN 5 |

EP 4 637 016 A1

CONTROL PATTERN 1

## FIG.4A

→ DC POWER COMPONENT

▮▮▮▶ AC POWER COMPONENT

$$P_{pcs} = -P_{pcs\_ac}\ cos(2\omega t) + P_{pcs\_dc}$$
$$(P_{pcs\_ac} < P_{C100})$$
$$P_C = P_{pcs} - P_{load}$$
$$P_{load} = P_{load\_ac}\ cos(2\omega t) + P_{load\_dc}$$
$$(P_{load\_ac} = P_{pcs\_ac} + P_{C100})$$

## FIG.4B

## FIG.4C

## FIG.4D

EP 4 637 016 A1

CONTROL PATTERN 2

FIG.5A

$$P_{pcs} = -P_{pcs\_ac}\ cos(2\omega t) + P_{pcs\_dc}$$
$$(P_{c100} \leqq P_{pcs\_ac} < 0)$$

$$P_C = P_{pcs}$$

$$P_{load} = P_{load\_dc}$$
$$(P_{load\_ac} = 0)$$

FIG.5B

FIG.5C

FIG.5D

CONTROL PATTERN 3

## FIG.6A

DC POWER COMPONENT

AC POWER COMPONENT

$$P_{pcs} = -P_{pcs\_ac} \cos(2\omega t) + P_{pcs\_dc}$$
$$(0 < P_{pcs\_ac} \leqq P_{C100})$$

$$P_C = P_{pcs}$$

$$P_{load} = P_{load\_dc}$$
$$(P_{load\_ac} = 0)$$

FIG.6B

FIG.6C

FIG.6D

EP 4 637 016 A1

CONTROL PATTERN 4

## FIG.7A

DC POWER COMPONENT

AC POWER COMPONENT

$P_{pcs} = -P_{pcs\_ac} \cos(2\omega t) + P_{pcs\_dc}$
$(P_{pcs\_ac} > P_{C100})$

$P_C = P_{C100}$

$P_{load} = P_{load\_ac} \cos(2\omega t) + P_{load\_dc}$
$(P_{load\_ac} = P_{pcs\_ac} - P_{C100})$

## FIG.7B

## FIG.7C

## FIG.7D

EP 4 637 016 A1

CONTROL PATTERN 5

## FIG.8A

DC POWER COMPONENT

AC POWER COMPONENT

$P_{pcs} = 0$

$P_{load} = P_{load\_dc}$
$(P_{load\_ac} \geqq 0)$

## FIG.8B

VARIANT (CONTROL PATTERN 4)

**FIG.9A**

2

$$P_{pcs} = -P_{pcs\_ac} \cos(2\omega t) + P_{pcs\_dc}$$
$$(P_{pcs\_ac} > P_{C100})$$

$$P_C = P_{C100}$$

$$P_{load} = P_{load\_ac} \cos(2\omega t) + P_{load\_dc}$$
$$(P_{load\_ac} = P_{pcs\_ac} - P_{C100})$$

**FIG.9B**

**FIG.9C**

**FIG.9D**

EP 4 637 016 A1

FIG.10

| OPERATION OF GRID-CONNECTED INVERTER | $P_{pcs\_ac}$ | POWER RIPPLE COMPONENT OF SMOOTHING CAPACITOR $P_{C\_ac}$ | POWER RIPPLE COMPONENT OF DC ROAD $P_{load\_ac}$ | |
|---|---|---|---|---|
| FORWARD POWER FLOW OPERATION $P_{pcs\_ac} < 0$ | $\lvert P_{pcs\_ac}\rvert > \dfrac{P_{load\_dc}}{2}$ | $-\left\{\ \lvert P_{pcs\_ac}\rvert - \dfrac{P_{load\_dc}}{2}\ \right\}$ | $-\left\lvert \dfrac{P_{load\_dc}}{2}\right\rvert$ | CONTROL PATTERN 1 |
| | $\dfrac{P_{load\_dc}}{2} \geqq \lvert P_{pcs\_ac}\rvert > 0$ | $0$ | $-\lvert P_{pcs\_ac}\rvert$ | CONTROL PATTERN 6 |
| REVERSE POWER FLOW OPERATION $P_{pcs\_ac} > 0$ | $\dfrac{P_{load\_dc}}{2} \geqq \lvert P_{pcs\_ac}\rvert > 0$ | $0$ | $+\lvert P_{pcs\_ac}\rvert$ | CONTROL PATTERN 7 |
| | $\lvert P_{pcs\_ac}\rvert > \dfrac{P_{load\_dc}}{2}$ | $+\left\{\ \lvert P_{pcs\_ac}\rvert - \dfrac{P_{load\_dc}}{2}\ \right\}$ | $+\left\lvert \dfrac{P_{load\_dc}}{2}\right\rvert$ | CONTROL PATTERN 4 |
| DISCONNECTED OPERATION $P_{pcs\_ac} = 0$ $P_{pcs\_dc} = 0$ | $0$ | $0$ | $0$ | CONTROL PATTERN 5 |

CONTROL PATTERN 6

## FIG.11A

$P_{pv} + P_{battery}$

$P_{pcs}$

40

41

$P_{pv}$

100

| PHOTOVOLTAIC PANEL | DC/DC |
|---|---|

DC POWER COMPONENT

AC POWER COMPONENT

$P_c$

GRID -CONNECTED INVERTER

20    30

10

$P_{battery}$

DC/DC 51

$P_{load}$

$P_{pcs} = -P_{pcs\_ac} \cos(2\omega t) + P_{pcs\_dc}$

$$\left(-\frac{P_{load\_dc}}{2} \leqq P_{pcs\_ac} < 0\right)$$

$P_C = P_{pcs} - P_{load}$

50

| STORAGE BATTERY | AIR CONDITIONER |
|---|---|

60

$P_{load} = P_{load\_ac} \cos(2\omega t) + P_{load\_dc}$

$(P_{load\_ac} = P_{pcs\_ac})$

## FIG.11B

$P_{pcs}$   $t$

## FIG.11C

$P_C$ 0   $t$

## FIG.11D

$P_{load}$   $t$

EP 4 637 016 A1

CONTROL PATTERN 7

FIG.12A

40 PHOTOVOLTAIC PANEL

41 DC/DC

$P_{pv}$

$P_{pv} + P_{battery}$

$P_{battery}$

50 STORAGE BATTERY

51 DC/DC

60 AIR CONDITIONER

$P_{load}$

20

$P_C$

30

10 GRID-CONNECTED INVERTER

100

$P_{pcs}$

3

→ DC POWER COMPONENT

┅► AC POWER COMPONENT

$$P_{pcs} = -P_{pcs\_ac}\, cos(2\omega t) + P_{pcs\_dc}$$
$$(0 < P_{pcs\_ac} \leqq \frac{P_{load\_dc}}{2})$$
$$P_C = P_{pcs} - P_{load}$$
$$P_{load} = P_{load\_ac}\, cos(2\omega t) + P_{load\_dc}$$
$$(P_{load\_ac} = P_{pcs\_ac})$$

FIG.12B

$P_{pcs}$

0

$t$

FIG.12C

$P_C$

0

$t$

FIG.12D

$P_{load}$

0

$t$

FIG.13 CONTROL PATTERN 6

FIG.14 CONTROL PATTERN 7

## INTERNATIONAL SEARCH REPORT

| International application No. |
|---|
| **PCT/JP2024/011721** |

**A. CLASSIFICATION OF SUBJECT MATTER**

**H02M 7/48**(2007.01)i; **F24F 11/88**(2018.01)i; **H02J 3/32**(2006.01)i; **H02J 3/38**(2006.01)i
FI: H02M7/48 R; H02J3/38 150; H02J3/32; H02J3/38 180; F24F11/88

According to International Patent Classification (IPC) or to both national classification and IPC

**B. FIELDS SEARCHED**

Minimum documentation searched (classification system followed by classification symbols)

H02M7/48; F24F11/88; H02J3/32; H02J3/38

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2017-220996 A (TABUCHI DENKI K.K.) 14 December 2017 (2017-12-14) paragraphs [0018]-[0027], fig. 1-5 | 1-14 |
| A | JP 2012-050167 A (SHARP KABUSHIKI KAISHA) 08 March 2012 (2012-03-08) paragraphs [0008]-[0030], fig. 1-8 | 1-14 |
| A | JP 2016-046982 A (NORITZ CORPORATION) 04 April 2016 (2016-04-04) paragraphs [0018]-[0052], fig. 1, 2 | 1-14 |
| A | JP 10-080150 A (RAILWAY TECHNICAL RESEARCH INSTITUTE) 24 March 1998 (1998-03-24) paragraphs [0012]-[0047], fig. 1-4 | 1-14 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **16 April 2024** | **07 May 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

## INTERNATIONAL SEARCH REPORT
### Information on patent family members

International application No.

**PCT/JP2024/011721**

| Patent document cited in search report | | | Publication date (day/month/year) | Patent family member(s) | Publication date (day/month/year) |
|---|---|---|---|---|---|
| JP | 2017-220996 | A | 14 December 2017 | (Family: none) | |
| JP | 2012-050167 | A | 08 March 2012 | (Family: none) | |
| JP | 2016-046982 | A | 04 April 2016 | (Family: none) | |
| JP | 10-080150 | A | 24 March 1998 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 11308871 A